**Europäisches Patentamt**

**European Patent Office**

**Office européen des brevets**

(19)

(11) Publication number : **0 457 362 B1**

(12)

# EUROPEAN PATENT SPECIFICATION

(45) Date of publication of patent specification :
**05.07.95 Bulletin 95/27**

(51) Int. Cl.⁶ : **H04N 7/32**

(21) Application number : **91108993.6**

(22) Date of filing : **06.09.84**

(54) **Vector quantizer.**

(30) Priority : **06.09.83 JP 163617/83
09.01.84 JP 1669/84
18.01.84 JP 6473/84
30.01.84 JP 14606/84
30.01.84 JP 14607/84
02.02.84 JP 17281/84
23.02.84 JP 32918/84
15.03.84 JP 49901/84**

(43) Date of publication of application :
**21.11.91 Bulletin 91/47**

(60) Publication number of the earlier application in
accordance with Art. 76 EPC : **0 137 314**

(45) Publication of the grant of the patent :
**05.07.95 Bulletin 95/27**

(84) Designated Contracting States :
**DE FR GB NL**

(56) References cited :
**EP-A- 0 097 858
US-A- 4 125 861
IEEE COMMUNICATIONS MAGAZINE VOL. 21,
no. 9, December 1983, ALLEN GERSHO et al.
"Vector Quantization: A Pattern Matching
Technique for Speech Coding"**

(73) Proprietor : **MITSUBISHI DENKI KABUSHIKI
KAISHA
2-3, Marunouchi 2-chome
Chiyoda-ku
Tokyo 100 (JP)**

(72) Inventor : **Murakami, Tokumichi, c/o Mitsubishi
Denki K.K.
Elect.Dev.Lab.,
325, Kamimachiya
Kamakura-shi, Kanagawa (JP)**
Inventor : **Asai, Kohtaro, c/o Mitsubishi Denki
K.K.
Elect.Dev.Lab.,
325, Kamimachiya
Kamakura-shi, Kanagawa (JP)**
Inventor : **Ito, Atsushi, c/o Mitsubishi Denki
K.K.
Elect.Dev.Lab.,
325, Kamimachiya
Kamakura-shi, Kanagawa (JP)**

(74) Representative : **Eisenführ, Speiser & Partner
Martinistrasse 24
D-28195 Bremen (DE)**

EP 0 457 362 B1

**Description**

BACKGROUND OF THE INVENTION

Field of the Invention

The present invention relates to a vector quantizer for quantizing the vector of image information and audio information.

Description of the Prior Art

The prior art relating to such a vector quantizer is described in literatures such as: Y. Linde, A. Buzo and R.M. Gray, "An Algorithm for Vector Quantizer", IEEE Trans., Com-28, pp. 84 - 95 (1980); A. Gersho, "On the Structure of Vector Quantizers", IEEE Trans., IT-82, pp. 157 - 166 (1982); A. Buzo and A.H. Gray, Jr, "Speech Coding Based Upon Vector Quantization", IEEE Trans., ASSP-28 (1980); B.H. Juang and A.H. Gray, Jr., "Multiple Stage Quantization for Speech Coding", Proc. Intl. Conf. on A.S.S.P., pp. 597 - 600, Paris (1982); and A. Gersho and V. Cuperman, "Vector Quantization: A Pattern Matching Technique for Speech Coding", IEEE, COMMUNICATION MAGAZINE, pp. 15 - 21, Dec. (1983).

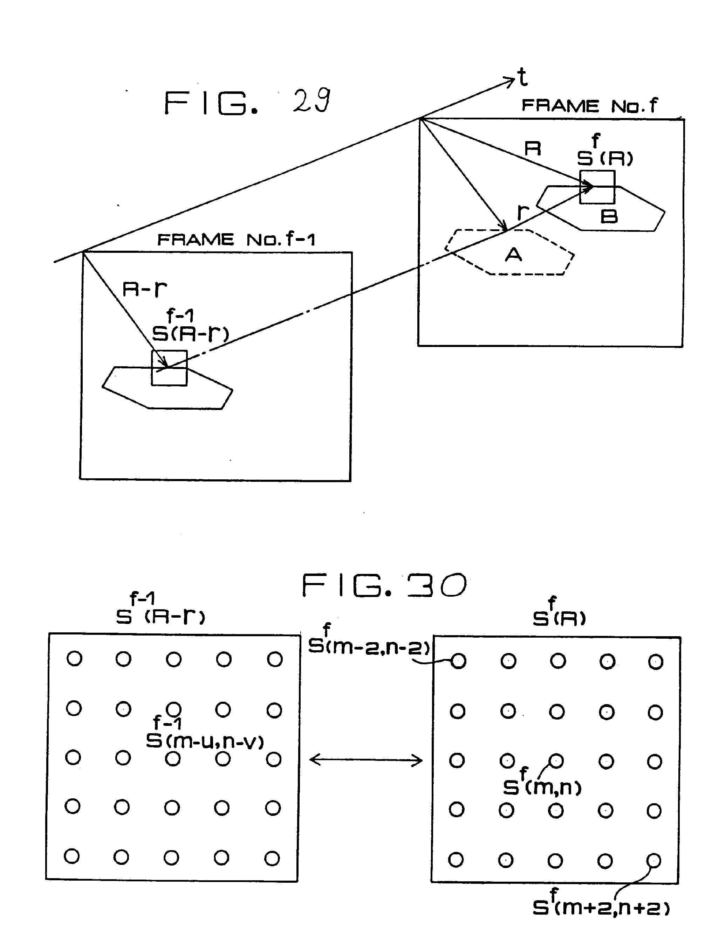

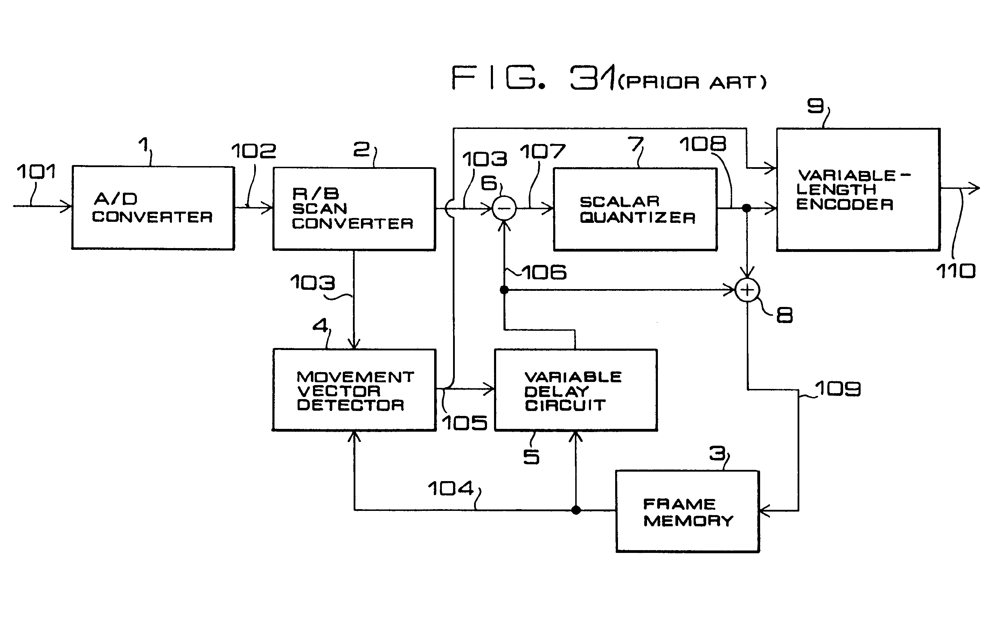

A vector quantizer as shown in Fig. 31, which will be described later, is known in addition to those vector quantizers of the prior art. The principle of the vector quantizer will be described prior to the description of the vector quantizer of Fig. 31. Referring to Fig. 29, assuming that an object has moved on the screen during the period from a frame No. f-1 to a frame No. f from a position A to a position B, then a block $S^f(R)$ including a plurality of the lattice samples of an image signal around a position vector R in the frame No. f becomes approximately equal to the block $S^{f-1}(R-r)$ of the image signal at a position determined by subtracting a movement vector r from a position vector R in the frame No. f-1. As shown in Fig. 30, when the position vector R = (m, n) and the movement vector r = (u, v), $S^f(R) \doteqdot S^{f-1}(R-r)$. Suppose the image signal at R = (m, n) is S(M, n) and $S^f(R) = [S(m-2, n-2), ..., S(m, n), ..., S(m+2, n+2)]$, the degree of analogy L(n, v) between $S^f(R)$ and $S^{f-1}(R-r)$ is defined as the block unit matching scale of 5x5 picture element as follows;

$$L(u, v) = \sum_g \sum_h \left| S^f(m+g, n+h) - S^{f-1}(m+g-u, n+h-v) \right|$$

In this state, the movement vector r is expressed by

$$r = [u, v \left| \min_{u,v} L(u, v) \right]$$

That is, the degree of analogy L(u, v) of $S^f(R)$ and $S^{f-1}(R-r)$ is expected to be minimized by block matching. Therefore, in introducing movement compensation into inter-frame prediction coding, the use of a block which minimizes L(u, v), extracted from image signal blocks of the frame No. f-1, as a prediction signal in giving the block $S^f(R)$ of the image signal of the position of R in the frame No. f to an inter-frame prediction encoder, the power of prediction error signal will be reduced to the least and encoding efficiency is improved.

Referring to Fig. 31 showing an example of the constitution of a conventional vector quantizer of this kind, there are shown an A/D converter 1, a raster/block scan converter 2, a frame memory 3, a movement vector detector 4, a variable delay circuit 5, a subtractor 6, a scalar quantizer 7, an adder 8 and a variable-length encoder 9.

The manner of operation of this vector quantizer will be described hereinafter. First the A/D converter 1 converts an analog picture input signal 101 into the corresponding digital signal and gives a digital picture signal sequence 102 according to the sequence of raster scanning. The output procedure of the raster scan digital picture signal sequence 102 on the time series of the picture signal is converted into block scaning by the raster/block scan converter 2, and thereby the digital picture signal sequence is converted into a block scan picture input signal 103 arranged sequentially in lattice block units (the interior of the block is raster scanning) from the top to the bottom and from the left to the right on the screen. A regenerative picture signal 104 of one frame before regenerated according to interframe DPCM loop is read from the frame memory 3. The movement vector detector 4 executes the block matching of the present block scan picture input signal 103, the regenerative picture signal 104 of one frame before and the picture signal and gives the movement vector r = (u, v) of the picture signal 104 of one frame before which minimizes the degree of analogy. The movement vectors (u, v) corresponds to the horizontal and the vertical shifts of the picture element of the block of the regenerative picture signal 104 of one frame before. On the basis of the movement vector 104, the variable delay circuit 5 block-shifts the one-frame preceding regenerative picture signal 104 by the movement vector and gives a predictive picture signal 106 which is the closest to the present block scan picture input signal 103. The subtractor 6 calculates the differential between the block scan picture input signal 103 and the predictive picture signal 106 and gives a predictive error picture signal 107 to the scalar quantizer 7. The scalar quantizer 7 converts the predictive error picture signal 106 into a predictive error quantization picture signal 108 reduced in quantization level at picture element unit. The adder 8 adds the predictive error quantization picture signal 108 and the predictive picture signal 106 and gives a regenerative picture signal 109 including scalar quantization error to the frame memory 3. The frame memory performs delaying operation to delay the present regenerative picture signal 109 by one frame. In the movement compensation interframe DPCM loop, supposing that the picture input signal 103 is $S^f(m, n)$, the predictive picture signal 106 is $P^f(m, n)$, the predictive error signal 107 is $\varepsilon^f(m, n)$, scalar quantization noise is $Q_s^f(m, n)$, the predictive error quantization signal 108 is $\hat{S}^f(m, n)$ and the one-frame preceding regenerative picture signal 104 is $\hat{S}^{f-1}(m, n)$, then

$$\varepsilon^f(m, n) = S^f(m, n) - P^f(m, n),$$
$$\hat{\varepsilon}^f(m, n) = \varepsilon^f(m, n) + Q_s^f(m, n),$$
$$\hat{S}^f(m, n) = P^f(m, n) + \hat{\varepsilon}^f(m, n) = S^f(m, n)$$
$$+ Q_s^f(m, n), \text{ and}$$
$$\hat{S}^{f-1}(m, n) = \hat{S}^f(m, n) \cdot Z^{-f}.$$

where $Z^{-f}$ denotes delay corresponding to one frame.

$P^f(m, n)$ is expressed through movement compensation on the basis of $\hat{S}^{f-1}(m, n)$ by the following formula:
$$P^f(m, n) = \hat{S}^{f-1}(m - u, n - v).$$

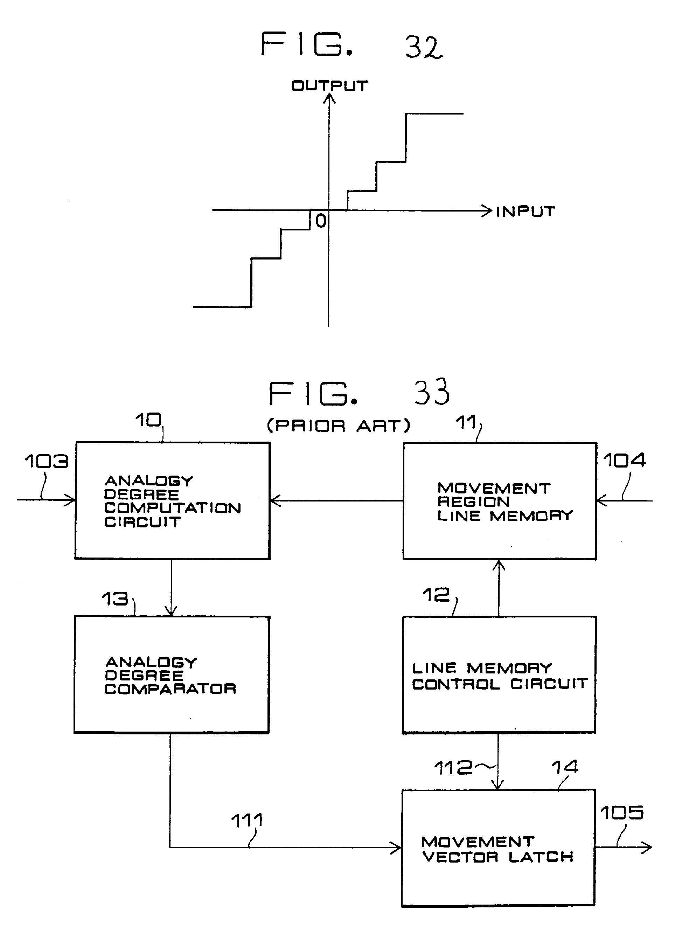

Fig. 33 shows an example of the constitution of the movement vector detector 4 for carrying out movement compensation.

Referring to Fig. 33, there are shown an analogy degree computation circuit 10, a movement region line memory 11, a line memory control circuit 12, an analogy degree comparator 13 and a movement vector latch 14.

The movement vector detector 4 gives $S^f(R)$ produced by blocking a plurality of the sequences of the present picture input signal 103 to the analogy degree computation circuit 10. At this moment, the lines of the one-frame preceding regenerative picture signal 104 stored in the frame memory 3 corresponding to the tracking range of the movement region of $S^f(R)$ are stored in the movement region line memory 11. The line memory control circuit 12 sends sequentially the blocks adjacent to a plurality of blocks $S^{f-1}(R+r)$ of the one-frame preceding regenerative image signal 104 to the analogy degree computation circuit 10. The analogy degree computation circuit 10 computes the analogy degree L(u, v) of the blocks in the neighborhood of $S^f(R)$ and $S^{f-1}(R-r)$ and the analogy degree comparator 13 determines the minimum analogy degree

$$\min_{u,v} L(u, v).$$

Since u and v corresponds to the horizontal and the vertical address shifts of blocks in the movement region line memory 11 respectively, the analogy degree comparator 13 gives a movement detection strobing signal 111 to the movement vector latch 14 when the analogy degree is minimized, to take in a movement vector address 112. The movement vector latch 14 sends the displacement r of $S^{f-1}(R-r)$ relative to $S^f(R)$ minimizing the analogy degree L(u, v) as a movement vector 105 to the variable delay circuit 5 and the variable-length encoder 9 of Fig. 31.

The variable-length encoder 9 of Fig. 31 processes the movement vector 105 and the predictive error quantization signal 108 through variable-length encoding to reduce the amount of information of the picture signal. The variable-length encoding enables the transmission of the movement compensation inter-frame encoding output 110 at a low bit rate.

Since the conventional movement compensation inter-frame encoder is constituted as described hereinbefore, the movement compensation operation is performed for every block and the inter-frame DPCM operation is performed for every picture element. Accordingly, the identification between the minute variation of the screen and noise is impossible and the variable-length encoding of the movement vector and the predictive error quantization signal is difficult. Furthermore, since the control of the variation of the quantity of produced information resulting from the variation of the movement scalar is difficult, a large loss is inevitable when trans-

EP 0 457 362 B1

mission is carried out through a transmission channel of a fixed transmission capacity. Still further, encoding the predictive error quantization signal for every picture element is inefficient. Since the movement compensation system is liable to be affected by transmission channel error, the frame memory needs to be reset or repeated transmission when transmission channel error occurs, which requires long resetting time.

SUMMARY OF THE INVENTION

Object of the present invention is to provide a vector quantizer capable of improving dynamic picture encoding efficiency by processing an output vector constituted from the picture signal of the preceding frame by the use of the correlation between frames through dynamic vector quantization and processing the residual error signal further through fixed vector quantization.

Still further object of the present invention is to provide a vector quantizer having, in cascaded connection, a dynamic vector quantizer for quantizing dynamic vectors and the like and a differential vector quantizer each being constituted to perform coding by the use of a set of output vectors having the least distortion, and thereby capable of encoding periodic signals such as picture signals extremely efficiently.

Further object of the present invention is to provide a dynamic multi-stage vector quantizer capable of eliminating the redundant component between frames by providing a dynamic preliminary vector quantizer to perform vector quantization while updating a code table in blocks and capable of achieving highly efficient encoding at a further reduced bit rate through the average value separation and the amplitude normalization vector quantization of residual signals in blocks by a fixed last vector quantizer.

BRIEF DESCRIPTION OF THE DRAWINGS

Figure 29 is an explanatory pictorial view for facilitating the understanding of the definition of the movement of picture signals between frames by a movement vector;

Figure 30 is an explanatory view showing the relation between the movement vector and the arrangement of the picture elements of a moved block;

Figure 31 is a block diagram showing a conventional movement compensation inter-frame encoder;

Figure 32 is a graph showing the input-output characteristics of the scalar quantizer employed in the encoder of Fig. 31;

Figure 33 is a block diagram of the movement vector detector employed in the encoder of Fig. 31;

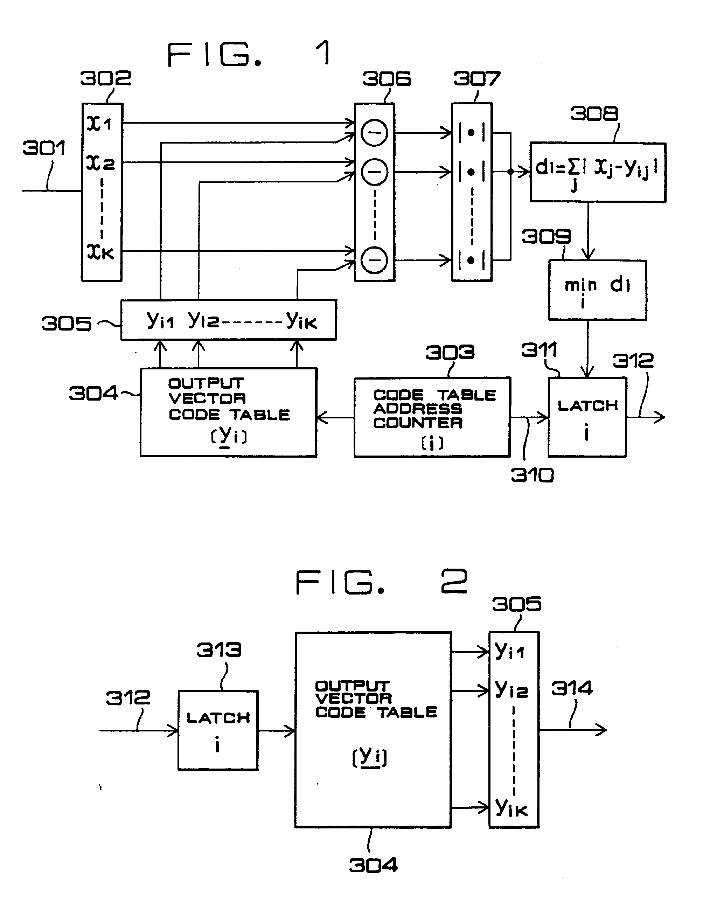

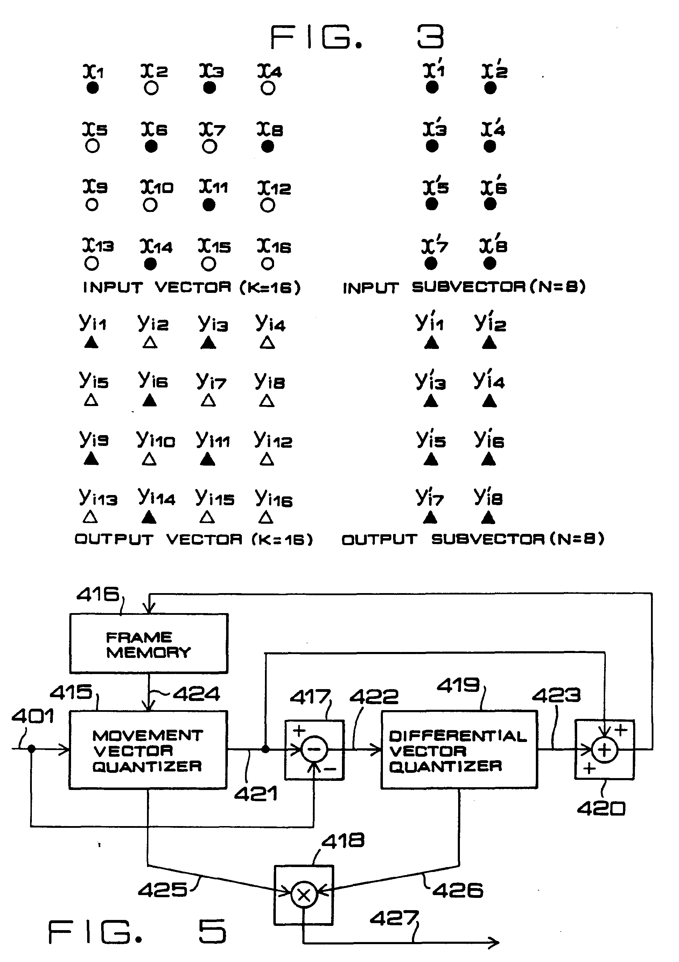

Figure 1 is a block diagram showing a constitution of a picture signal vector quantization encoder;

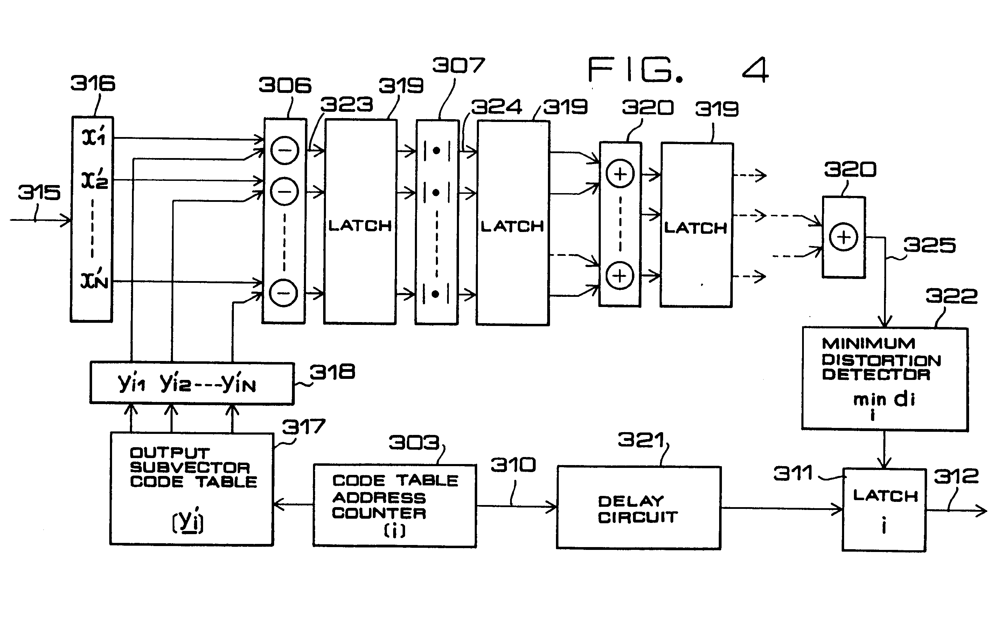

Figure 2 is a block diagram showing a constitution of a picture signal vector quantization decoder;

Figure 3 is an illustration showing, in comparison, the input and output subvectors a picture signal sub-sample vector quantizer according to the present invention and the input and output vectors of a conventional picture signal vector quantizer;

Figure 4 is a block diagram showing a picture signal vector quantization encoder of the present invention;

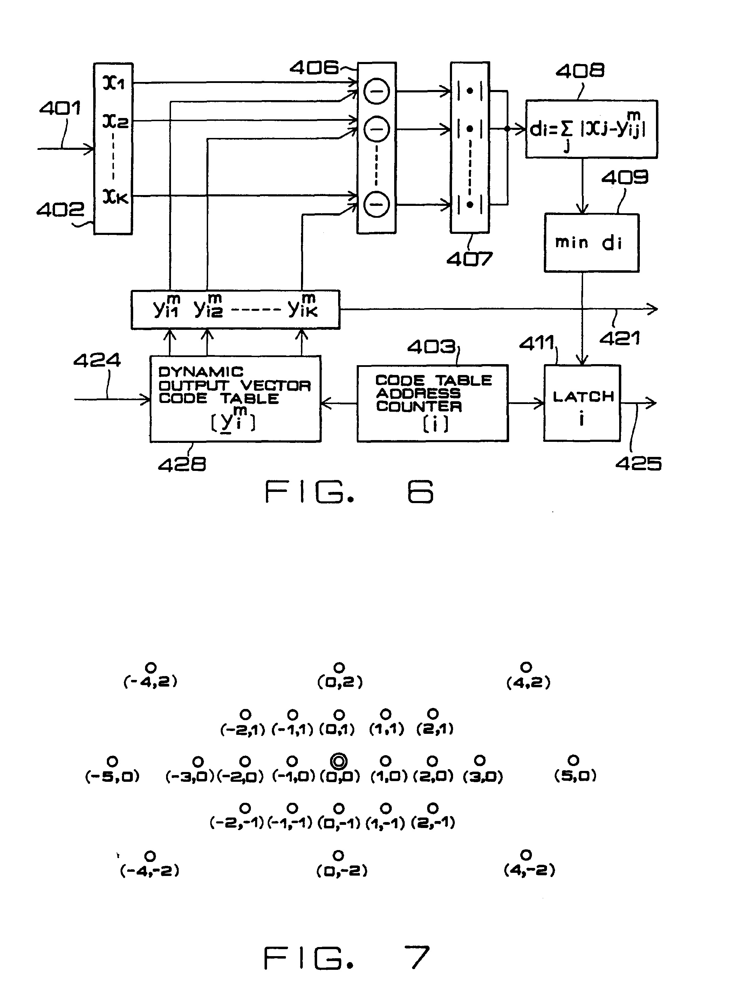

Figure 5 is a block diagram showing a picture signal movement compensation vector quantization encoder embodying the present invention;

Figure 6 is a block diagram showing an exemplary constitution of the movement vector quantizer of Fig. 5;

Figure 7 is a representation showing an example of movement vector arrangement for explaining a dynamic output vector code table producing method according to the present invention;

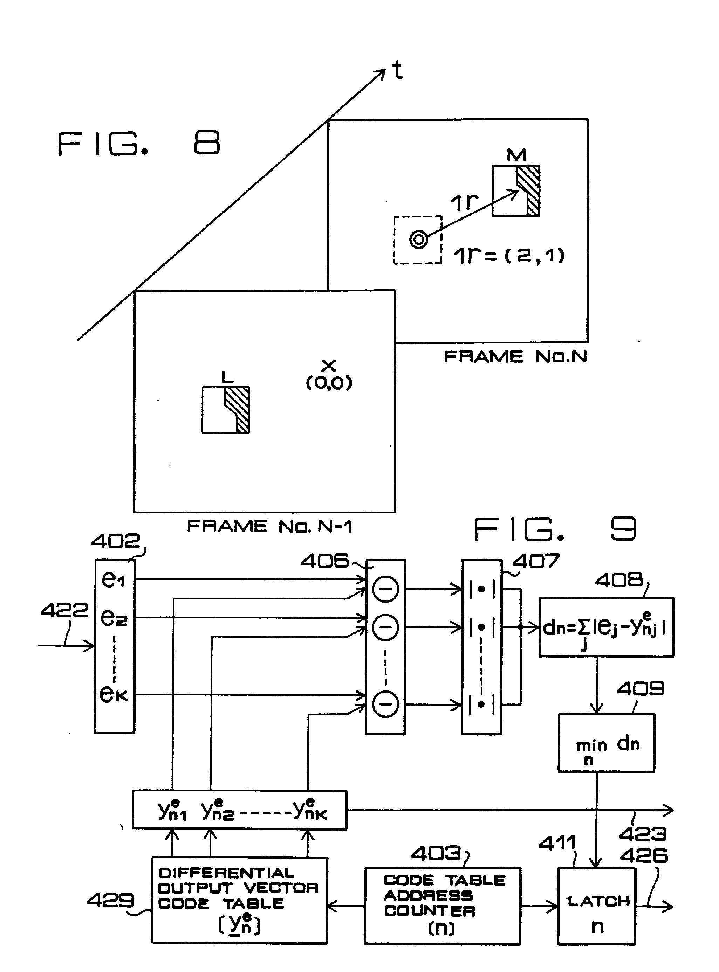

Figure 8 is a view for explaining the principle of movement vector quantization of the present invention;

Figure 9 is a block diagram showing an exemplary constitution of the differential vector quantizer of Fig. 5;

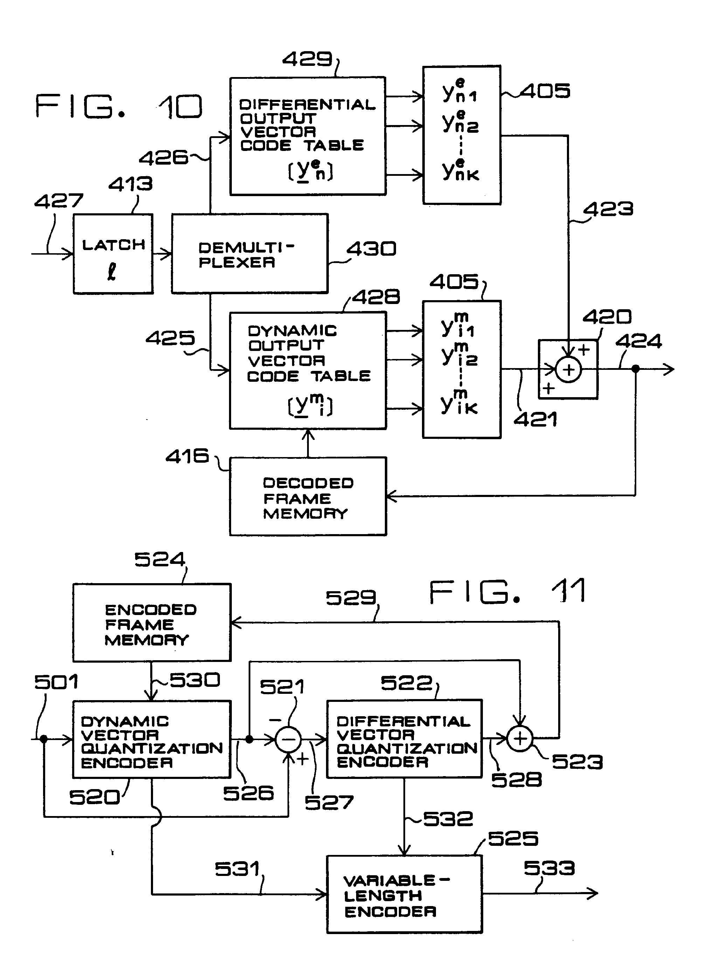

Figure 10 is a block diagram showing the constitution of a picture signal movement compensation vector quantization decoder according to the present invention;

Figure 11 is a block diagram showing a dynamic multistage vector quantization encode embodying the present invention;

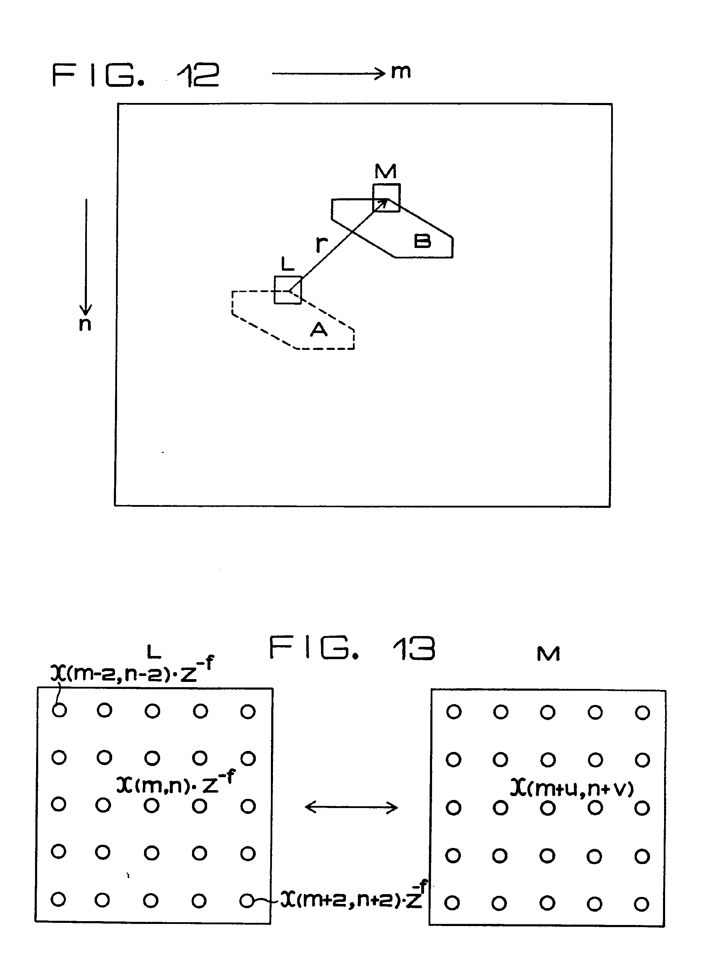

Figure 12 is a representation for explaining the principle of the front movement vector encoder of the vector quantization encoder of Fig. 11;

Figure 13 is a representation explaining the inter-frame matching between the preceding frame and the present frame in movement vector coding;

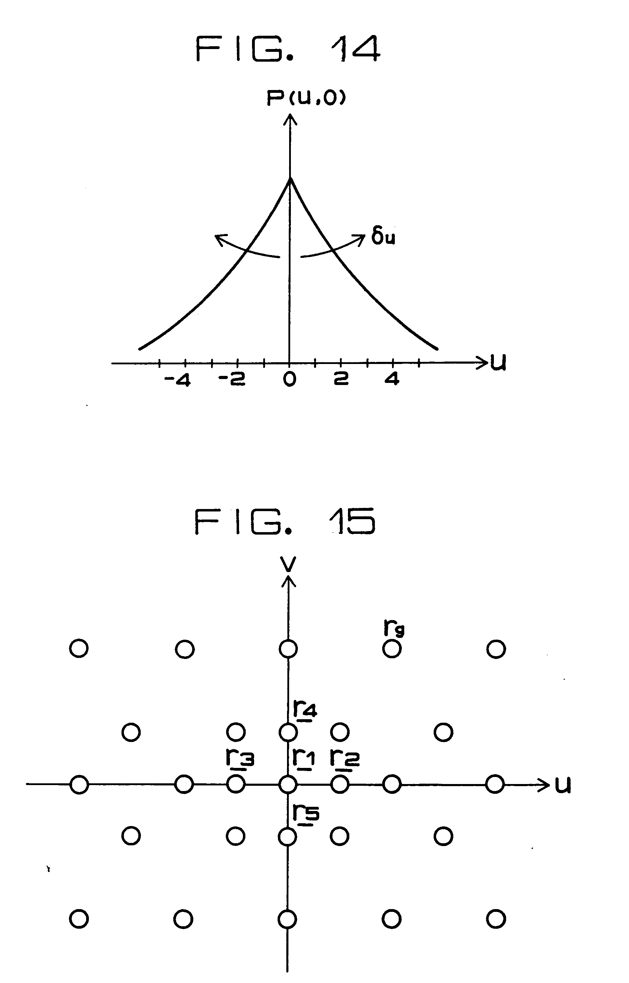

Figure 14 is a graph showing the probability distribution of movement vectors;

Figure 15 is a representation explaining the arrangement of movement vectors;

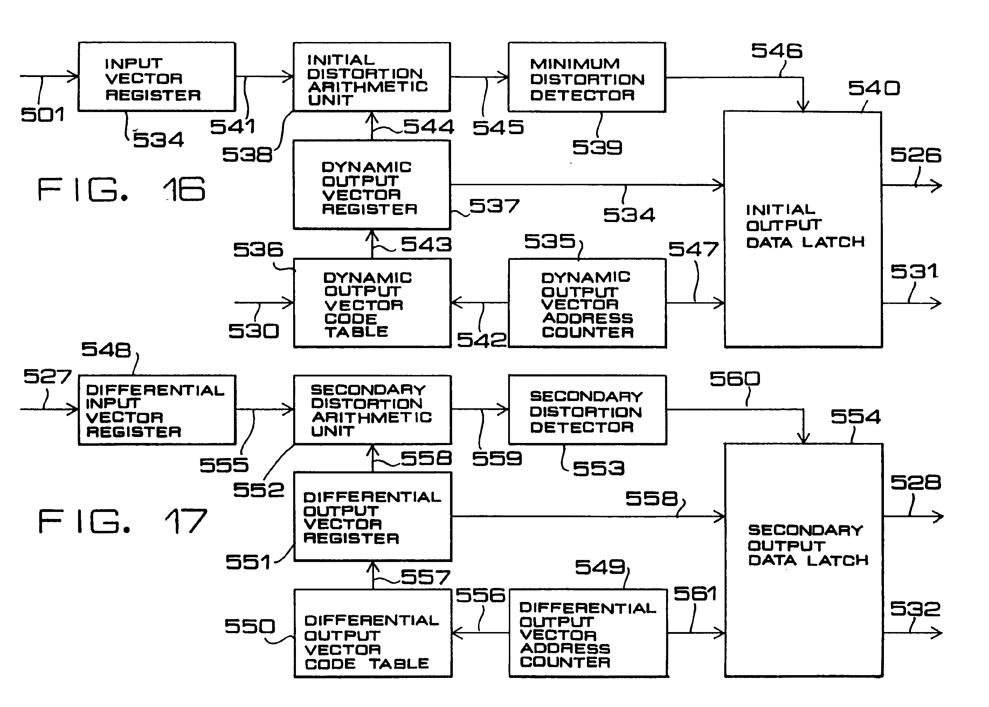

Figure 16 is a block diagram showing an exemplary constitution of the front vector quantization encoder of a vector quantization encoder according to the present invention;

4

Figure 17 is a block diagram showing the constitution of the differential vector quantization encoder of Fig. 11;

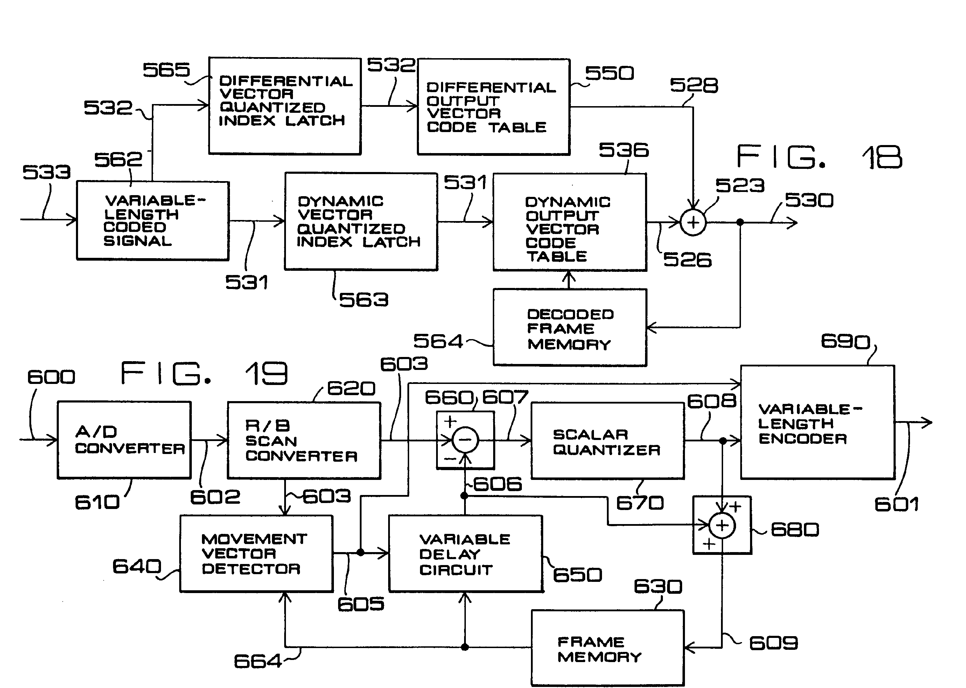

Figure 18 is a block diagram showing the constitution of a dynamic multistage vector quantization decoder embodying the present invention;

Figure 19 is a block diagram showing an example of a movement compensation inter-frame encoder;

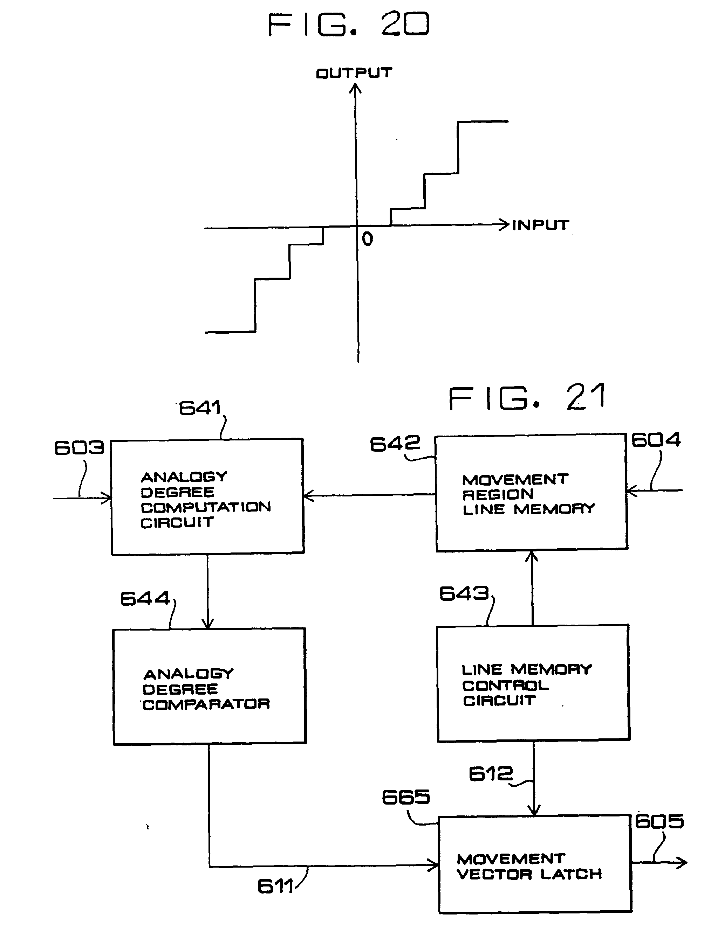

Figure 20 is a graph showing the input-output characteristics of the scalar quantizer of Fig. 19;

Figure 21 is a block diagram showing the constitution of the movement vector detector of Fig. 19;

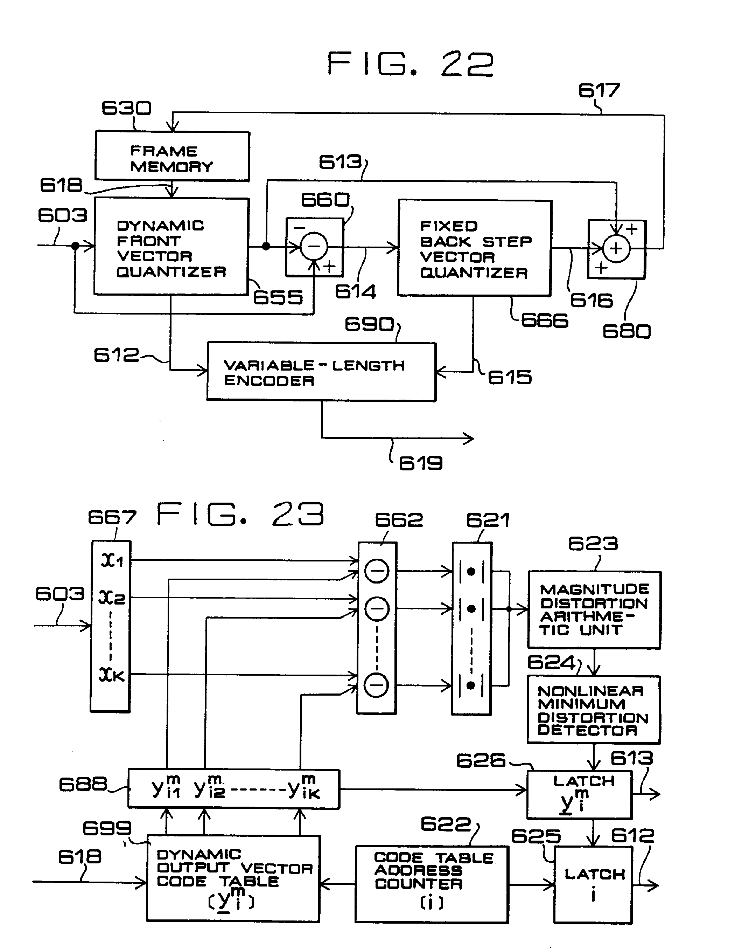

Figure 22 is a block diagram showing the constitution of the encoder of a vector quantizer embodying the present invention;

Figure 23 is a block diagram showing the constitution of a dynamic front vector quantizer of the present invention;

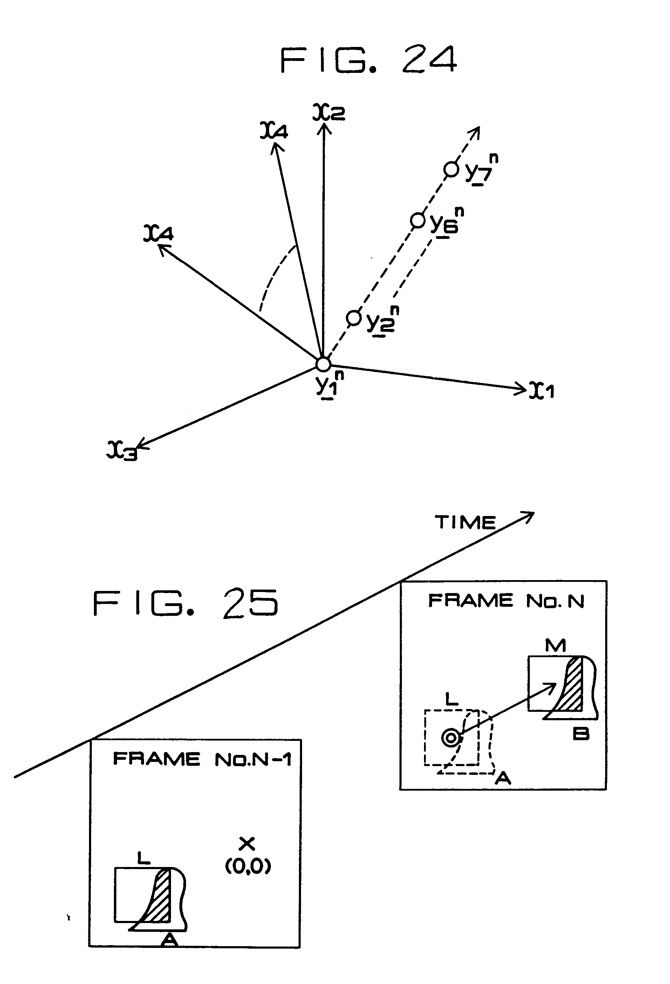

Figure 24 is a graphical illustration showing the arrangement of fixed output vectors in multi-dimensional space;

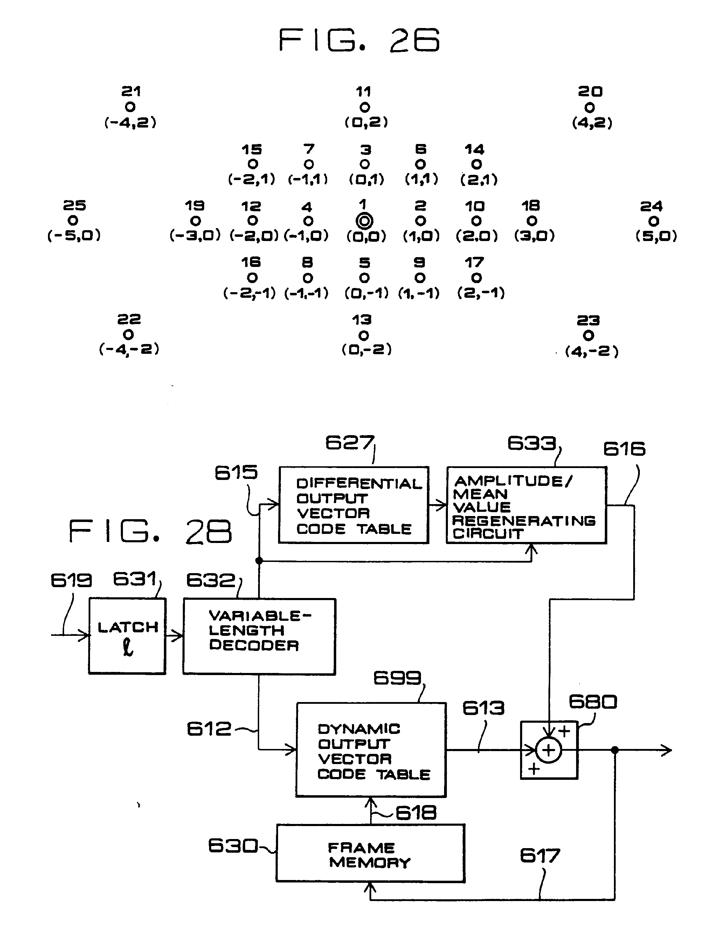

Figures 25 and 26 are explanatory representations showing an example of a rewritable output vector code table producing method;

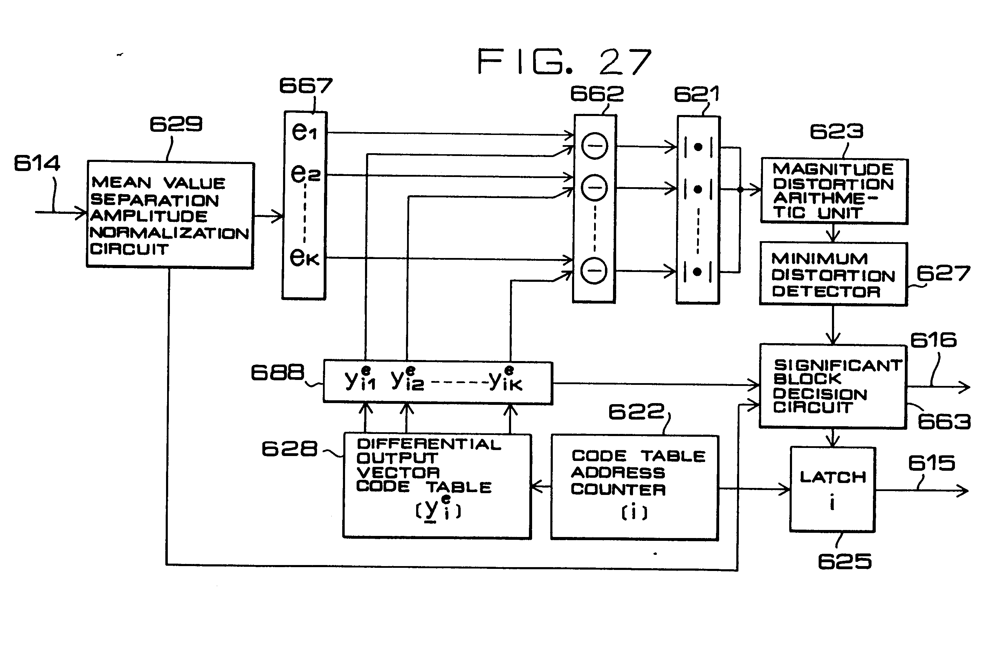

Figure 27 is a block diagram showing the constitution of the fixed back vector quantizer of Fig. 22;

Figure 28 is a block diagram showing the constitution of the decoder of a vector quantizer embodying the present invention;

A first embodiment of the present invention will be described hereinafter. Prior to the concrete description of the embodiment, the principle of vector quantization employed by this embodiment will be explained briefly.

Suppose that k sets of input signal sequences are collectively expressed by an input vector $\underline{x} = [x_1, x_2, ..., x_k]$ and the set of N output vector points $y_i = [y_{i1}, y_{i2}, ..., y_{ik}]$ of k-dimensional Euclidean space $R^k$ ($\underline{x} \in R^k$) is Y = $[\underline{y}_1, \underline{y}_2, ..., \underline{y}_N]$. If each partition of $R^k$ with the output vector $y_i$ as a representative point, for example, the center of gravity, is $R_1, R_2, ..., R_N$, vector quantization is a mapping of $R^k$ into Y. The encoder of a vector quantizer defines an output vector $\underline{y}_j$ lying at the shortest distance from an input vector, namely, an output vector with a minimum distortion from the input vector, as follows and makes a search for the output vector $y_i$.

If $d(\underline{x}, \underline{y}_i) < d(\underline{x}, \underline{y}_j)$ for all J, $\underline{x} \in R_i$, that is, $\underline{x} \rightarrow \underline{y}_i$

where $d(\underline{x}, \underline{y}_i)$ is the distance (distortion) between the input vector and the output vector. The index i of the output vector is the output of the encoder. The decoder reads $y_i$ from a table storing Y beforehand and gives $y_i$ as an output. Thus, since the vector quantizer transmits or records the output i of the encoder, the coding efficiency thereof is very high. The set Y of the output vector $y_i$ can be obtained by clustering (repetition of the selection of representative point and the partition of the signal space until the total sum of distortions is minimized) using a picture signal sequence serving as a training model. Exemplary methods of calculating $d(\underline{x}, \underline{y}_i)$ are as follows.

$$① \quad d(\underline{x}, \underline{y}_i) = \sum_{j=1}^{k} (x_j - y_{ij})^2 \quad \text{(squared distortion)}$$

$$② \quad d(\underline{x}, \underline{y}_i) = \min_{j} {}^{\max} |x_j - y_{ij}| \quad \text{(maximum element distortion)}$$

$$③ \quad d(\underline{x}, \underline{y}_i) = \sum_{j=1}^{k} |x_j - y_{ij}| \quad \text{(absolute distortion)}$$

A conventional vector quantizer will be described with reference to a concrete constitution thereof. Fig. 1 shows an example of an encoder. In this example, absolute distortion of the method ③ is used to define $d(\underline{x}, \underline{y}_i)$. In Fig. 1, indicated at 301 is an input vector, at 302 is an input vector register, at 303 is a code table address counter, at 304 is a code table memory, at 305 is an output vector register, at 306 is a parallel subtractor, at 307 is a parallel magnitude arithmetic unit, at 308 is a magnitude distortion arithmetic unit (adder), at 309 is a minimum distortion vector detector, at 310 is an index signal, at 311 is a latch and at 312 is an encoder output signal. Fig. 2 shows an example of a decoder. In Fig. 2, indicated at 313 is a latch and at 314 is an output vector.

The actions of this encoder and this decoder will be described hereinafter. A set of k picture signal sequences are blocked to provide an input vector $\underline{x} = [x_1, x_2, ..., x_k]$. First the register 302 latches the input vector.

The code table address counter 303 reads output vectors $\underline{y}_i$ sequentially from the output vector code table memory 304. The output vectors read out is latched by the output vector register 305. The magnitude distortion arithmetic unit 308 receives $\underline{x}$ and $\underline{y}_i$ from the parallel subtractor 306 and the parallel magnitude arithmetic unit 307 and calculates the distortion $d_i$ by the use of formula

$$d_i = d(\underline{x}, \underline{y}_i) = \sum_{j=1}^{k} |x_j - y_{ij}|.$$

Then, the minimum distortion detector 309 detects the minimum value among the distortions $d_i$ between $y_i$ and x which are read out sequentially. The minimum distortion is given by

$$d = \min_{i} d_i.$$

The vector that gives the minimum distortion is the vector quantization output of the vector $\underline{x}$. Upon the detection of the minimum distortion vector, the minimum distortion detector 309 gives a strobing signal to the latch 311 and the latch 311 receives the index signal 310 indicating the address of the vector. The latch 311 gives the index as an output signal 312 of the encoder.

In the decoder, the latch 313 receives the encoder output signal 312. The index is decoded, an output vector $y_i$ is read from the code table 304 and latched by the output vector register 305 and an output vector 314 is given.

A second embodiment of the present invention, constituted on the basis of the above-mentioned principle will be described concretely hereinafter.

In this embodiment, the respective sizes of the input vector register 302, the output vector register 305, the code table memory 304 and the parallel subtractor 304 are reduced to half by the use of subsamples, latches and adders are added to the parallel magnitude arithmetic unit 307 and the magnitude arithmetic unit 308 and those components are connected in a cascade connection of the pipeline system to reduce the circuit scale of the encoder and to solve the problems of realtime processing.

Fig. 3 shows the correspondent relation between the input and output vectors of the above-mentioned basic vector quantizer and the input and output vectors of the present vector quantizer. As shown in Fig. 3, the encoder of the present vector quantizer uses input subvectors obtained by subsampling input vectors and output subvectors obtained by subsampling the output vectors obtained by clustering using picture signal sequence.

The constitution and the operation of this embodiment of a vector quantizer according to the present invention will be described hereinafter. Fig. 4 shows an exemplary constitution of the encoder of the present vector quantizer. In Fig. 4, indicated at 303 is a code table address counter, at 306 is a parallel subtractor, at 307 is a parallel magnitude arithmetic unit, at 310 is an index signal, at 311 is a latch, at 312 is an encoder output signal, at 315 is an input subvector, at 316 is an input subvector register, at 317 is an output subvector code table memory, at 318 is an output subvector register, at 319 is a latch, at 320 is a parallel adder, at 321 is delay circuit for compensating the delay due to the pipeline connection of the components and at 322 is a minimum distortion detector.

The operation of this vector quantizer will be described hereinafter.

A set of N picture signal sequences are sampled and then blocked to obtain an input subvector $x' = [x_i',$ $x_2', ..., x_N']$. This input subvector 315 is first latched by the register 316. The code table address counter 303 reads output subvectors $y_i'$ sequentially from the output subvector code table memory 317 and let the register 318 latch the output subvectors $y_i'$. The parallel subtractor 306 obtains N differences between the input subvector latched by the register 316 and the output subvectors latched by the register 318.

$$(323) \dots d_{ij} = x_i' - y_{ij}' \qquad (j = 1, 2, ..., N).$$

Then, the outputs 323 are latched by the register 319 and are converted into magnitudes $|d_{ij}|$ $(j = 1, 2, ..., N)$ 324 by the parallel magnitude arithmetic unit 307. At this time, the inputs $y_{i1}', y_{i2}', ..., y_{iN}'$ of the parallel subtractor are updated to $y'_{(i+1)1}, y'_{(i+1)2}, ..., y'_{(i+1)N}$. The magnitudes $|d_{ij}|$ $(j = 1, 2, ..., N)$ 324 are then latched by the register 319 and are added sequentially every two inputs. That is, the adder 320 reduces the number of output signals to the half the number of the input signals. This process is repeated successively until the number of the output of the adder 320 is reduced to one. The final output 325 of the adder 320 is

$$325 \ldots d_1 = \sum_{j=1}^{N} |x_j' - y_{ij}'|.$$

The minimum distortion detector compares the present value d and the succeeding input value $d_i$ and stores the smaller value as d. The minimum distortion detector repeats this comparison until the last input to obtain a minimum distortion

$$d = \min_{1} d_i.$$

The vector that gives the minimum distortion is the vector quantization output for the vector x. When the minimum distortion vector is detected, a strobing signal is given to the latch 211 and an index signal 310 indicating the address of the vector is taken. The latch 311 gives the index as an encoder output signal 312. The same decoder as shown in Fig. 2 is employed. In the decoder, the latch 313 receives the encoder output signal 312, and the index is decoded, an output vector $y_i'$ is read from the code table 314 consisting of output vector sets obtained by clustering using picture signal sequences and the output vector $y_i'$ read is latched by the output vector register 305 and given as an output vector 314. Although the input and the output vectors are obtained by subsampling with N = 8 and k = 16 in this embodiment, naturally, the values of N and k and the input and the output subvectors can optionally be selected.

The constitution of the subvector quantizer of this embodiment as described hereinbefore reduces the circuit scale of the encoder and the pipeline connection of the components for the successive parallel operation of the minimum distortion detector facilitates realtime processing.

The constitution and the operation of the fourth embodiment of the present invention will be described hereinafter. Fig. 5 shows an exemplary constitution of this embodiment of a movement compensation vector quantizer. In Fig. 5, indicated at 415 is a movement vector quantizer, at 417 is a subtractor to obtain the differential signal 422 between the output signal 421 and the input signal 401 of the movement vector quantizer, at 419 is a differential vector quantizer to vector-quantize the differential signal 422, at 420 is an adder to add the output signal 422 of the differential vector quantizer and the output signal 421 of the movement vector quantizer, at 426 is a differential vector index signal, at 418 is a multiplexer to generate an encoder output 427 by multiplying the code train of the movement vector index signal by the code train of the differential vector index signal and at 416 is a frame memory to store the output signal of the adder 420 given in the processing of the preceding frame.

The operation of this movement compensation vector quantizer will be described hereinafter. The movement vector quantizer 415 executes the movement compensation of the input signal 401 on the basis of the picture information of the preceding frame, i.e., the output signal 424 of the frame memory 416. The constitution and the action of this movement vector quantizer will be described hereunder.

Fig. 6 shows an exemplary constitution of the movement vector quantizer. In Fig. 6, indicated at 428 is a dynamic output vector code table, at 421 is an output movement vector having the minimum error with respect to the pattern of a block to be coded and at 425 is the movement vector index for the output vector having the minimum error. The movement vector quantizer processes dynamic output vector code table produced adaptively from the picture signal of the preceding frame as an output vector set through the same distortion calculation process as that of the conventional vector quantizer. The dynamic output vector code table is produced adaptively at the processing of each block in the manner as described hereunder.

As shown in Fig. 8, in vector-quantizing the block No. M of a frame No. N, twenty-five blocks are cut out from the preceding frame, i.e., a frame No. N-1, so that the center of the block is located as shown in Fig. 7 with a point in the frame No. N-1 coinciding with the center of the block, i.e., a point X in Fig. 7, as the origin. These blocks are indexed as a set of movement output vectors and registered in the dynamic output vector code table. The arrangement as shown in Fig. 7 can optically be selected. Furthermore, the movement vector set may be produced by using the blocks cut out from the present frame. The movement vector quantizer searches the vectors registered in the dynamic output vector code table for a vector which provides the minimum distortion. In the example of Fig. 8, when it is decided that the pattern of the block No. M of the frame No. N is the most analogous with the pattern of the block No. L of the frame No. N-1, the direction of the movement vector in the arrangement of Fig. 7 is (2, 1) with respect to the origin. That is, movement detection has been executed for the movement of the block No. L of the frame No. N-1 to the position of the block No. M of the frame No. N. The movement vector quantizer executes an operation to shift the block No. L to the origin (point X) in the frame No. N-1. The movement vector quantizer gives the index 426 of a vector that minimizes the distortion to the multiplexer 418 and gives a movement output vector that minimizes the distortion as a quantized picture signal 421 to the subtractor 417.

Referring to Fig. 5, the subtractor 417 calculates the difference between the picture signal 421 quantized by the movement vector quantizer and the original picture signal 401 and gives a differential signal 422. This differential signal 422 is a signal eliminated of the redundant component on the basis of the correlation of the picture signal with the picture signal of the preceding frame. The differential vector quantizer 419 receives the differential signal 422 and executes the same distortion calculation as that of the conventional vector quantizer with a fixed differential output vector code table prepared beforehand through clustering training, as shown in Fig. 9, as a differential output vector set. Finally, the differential vector quantizer 419 gives the index 426 of a differential output vector that minimizes the distortion from the input vector to the multiplexer 418 and gives the corresponding differential output vector to the adder 420 as a quantized differential signal 423.

The adder 420 of Fig. 5 calculates the sum of the picture signal 421 quantized by the movement vector quantizer and the differential signal 423 quantized by the differential vector quantizer and gives the result as a regenerative picture signal to the frame memory 416. The frame memory executes variable delaying. The output signal 424 of the frame memory 416 is used as information for the movement compensation of the next frame. The multiplexer 418 multiplies the code train of the movement vector index 425 by the code train (word) of the differential vector index 426 and gives a code train 427 as an encoder output signal.

In the decoder, the latch 413 receives the encoder output signal 427 and the demultiplexer 430 divides the code train into two parts and regenerates the movement vector index 425 and the differential vector index 426. A differential output vector corresponding to the differential vector index 426 is read from the differential output vector code table 429 to regenerate the quantized differential signal 423. A movement output vector corresponding to the movement vector index 425 is read from the dynamic output vector code table 428 and the picture signal 421 quantized by the movement vector quantizer is regenerated. For this purpose, the same dynamic output vector coder table 428 and the differential vector code table 429 as those used in the encoder are used. The adder 420 calculates the sum of the regenerated differential signal 423 and the picture signal 421 to decode the output picture signal 424. This output picture signal 424 is stored in the frame memory 416 to be used as information for the decoding processing of the next frame.

When the movement vector quantizer thus constituted according to the present invention is applied to encoding an animated cartoon, in which quite analogous frames are transmitted successively, since a block similar to the picture element pattern of a block to be encoded is located in the neighborhood of the corresponding position in the preceding frame, a movement output vector consisting of those blocks is produced for every processing of each frame and redundancy based on the correlation between frames is eliminated by the use of the movement output vector quantizer. Accordingly, the contents of the dynamic output vector code table are updated for every frame and the movement vector quantization error signal is quantized through multistage vector quantization, and thereby efficient coding is attained.

A third embodiment of the present invention will be described hereinafter.

Fig. 11 shows the constitution of this embodiment. In Fig. 11, indicated at 520 is a dynamic vector quantization encoder, at 521 is a subtractor, at 522 is a differential vector quantization encoder, at 523 is an adder, at 524 is an encoded frame memory and at 525 is a variable-length encoder. This embodiment of the vector quantizer according to the present invention is constituted of a multistage connection of a dynamic vector quantization encoder for encoding initial movement vectors and a secondary differential vector quantizer for vector-quantizing the differential signal between the initial movement vector encoded signal and the present input signal.

First the principle of movement vector encoding in the initial dynamic vector quantization will be described.

The sampling signal sequence of a picture signal is obtained by scanning two-dimensionally arranged picture elements. Therefore, as shown in Fig. 12, when an object A in the preceding frame moves during one-frame scanning cycle and becomes an object B in the present frame, the blocked picture signal sequence L of the preceding frame is identical with the blocked picture signal sequence M of the present frame. Suppose that the horizontal and the vertical coordinates of the two-dimensionally arranged picture elements are given by (m, n) and the displacement of the block M of the present frame from the block L of the preceding frame is given by a movement vector $\underline{r} = (u, v)$. Then, the relation between the picture signals of the block L and the block M is given, as shown in Fig. 13, by $X(m, n) \cdot Z^{-f} = X(m+u, n+v)$, where $X(m, n)$ is the picture signal at each position of the picture element (m and n are integers) and $Z^{-f}$ is delay corresponding to one-frame cycle. Thus, in vector-quantizing the block M of the picture signal sequences of the present frame, an output vector minimizing the distortion is obtained by the block L of the preceding frame, which block L is apart from the block M by the movement vector $\underline{r} = (u, v)$. That is, in vector-quantizing an animated picture signal, it is more efficient, as long as the picture of the same object is in the preceding frame, to use the two-dimensional displacement of the block of the picture signal sequences in the preceding frame, namely, to use neighborhood blocks which are apart from the present block by the movement vector $\underline{r}$ as a set of output vectors before performing encoding by the use of a set of output vectors obtained by clustering input signal sequences. This process is defined as dynamic vector quantization $Q_d$ as follows. Let $\underline{x}$ denote a k-dimensional input vector formed by blocking every k picture input signal sequences of the present frame, $\underline{y}_g$ denote a k-dimentional output vector formed by similarly blocking picture input signal sequences in the preceding frame, which block is apart from the block of the present frame by $\underline{r}_g$, and $\underline{r}_g$ denote a quantized movement vector formed by selecting two-dimensional displacements at random. A set of P quantized movement vectors $\underline{r}_g$ is given by $r^P = \{r_1, r_2, ..., r_p\}$. An index set of the movement vector $\underline{r}_g$ is given by $G = \{1, 2, ..., P\}$. Then, dynamic vector quantization $Q_d$ is expressed by a cascaded connection of coding $C_d$ and decoding $D_d$:

$$Q_d(\underline{x}) = \underline{y}_g \text{ if } d(\underline{x}, \underline{y}_g) < d(\underline{x}, \underline{y}_j) \text{ for all } j$$
$$C_d : \underline{x} \to g$$
$$D_d : g \to \underline{y}_g$$
$$Q_d = D_d \cdot C_d.$$

The distortion $d(\underline{x}, \underline{y}_g)$ in a k-dimensional space is expressed in Euclidean norm:

$$d(\underline{x}, \underline{y}_g) = \sum_g (x_j - y_{gj})^2$$

where $x_j$ and $y_{gj}$ are the No. j dimensions of $\underline{x}$ and $\underline{y}_g$ respectively.

Fig. 14 shows a plot of the horizontal probability distribution $P(u, o)$ of

$$\min_g d(\underline{x}, \underline{y}_g),$$

namely, the occurrence probability distribution $P(\underline{r}) = P(u, v)$ of a movement vector of minimum distortion over the entire area of several frames. Accordingly, the arrangement of a quantized movement vector $\underline{r}_g$ is assumed to be that of Fig. 15. In a dynamic vector quantization process according to the present invention, a set $\underline{r}^P$ of P movement vectors $\underline{r}_g$ is obtained through the clustering training of actual picture signal sequences so that the total sum of distortions $d(\underline{x}, \underline{y}_g)$ will be minimized, by the use of the input vector $\underline{x}$ of the present frame and the output vectors $\underline{y} = \underline{x}(r) \cdot z^{-f}$, which is separated by a distance $r$, of the preceding frame among picture input sequences over the entire areas of several frames. The initial dynamic vector quantizer maps the input vector $\underline{x}$ of the present frame into one of the sets of dynamic output vectors $\underline{y}_g$, on the basis of the set $r_g$ of optimal movement vectors obtained through the above-mentioned procedure. Furthermore, in the case of dynamic vector quantization, as in the case of scene change, sometimes no appropriate dynamic output vector is found in the preceding frame. This problem is solved by providing a set of a plurality of mean value vectors

$$\underline{y}_h = \{y_{h1}, y_{h2}, ..., y_{hk}\} \ (y_{hk} = y_{hj} \text{ for all } j).$$

The dynamic vector quantization signal $\underline{x} = \underline{y}_g$ or $\underline{y}_h$ is subtracted from the input vector $\underline{x}$ of the present frame to give a differential input vector $\underline{\varepsilon}$, which is vector-quantized by the next differential vector quantizer to give a differential output vector $\hat{\underline{\varepsilon}}$. The differential vector-quantized signal $\hat{\underline{\varepsilon}}$ and the dynamic vector-quantized signal $\hat{\underline{x}}$ are added together to give a dynamic multistage vector-quantized signal $\hat{\hat{\underline{x}}}$. This $\hat{\hat{\underline{x}}}$ is stored in a frame memory and delayed by one-frame cycle to use the same as a set of dynamic output vectors in dynamic vector quantization.

The above-mentioned actions will be described in connection with Fig. 11.

Let $\underline{x}$ denote the input vector 501 of the present frame, $\hat{\underline{x}}$ denote a dynamic vector-quantized signal 526, $\underline{\varepsilon}$ denote a differential input vector 527, $\hat{\underline{\varepsilon}}$ denote a differential vector-quantized signal 528, $\hat{\hat{\underline{x}}}$ denote a dynamic multistage vector-quantized signal 529 and $\underline{y}_g$ denote a dynamic output vector 530. The above-mentioned operations are implemented by a dynamic vector quantizer 520, a subtractor 521, a differential vector quantizer 522, an adder 523 and an encoding frame memory 534.

$$\hat{\underline{x}} = \underline{x} + \underline{q}_d \qquad \underline{\varepsilon} = \underline{x} - \hat{\underline{x}} = -\underline{q}_d$$
$$\hat{\underline{\varepsilon}} = \underline{\varepsilon} + \underline{q}_e = -\underline{q}_d + \underline{q}_e$$

$$\hat{\hat{x}} = \hat{\underline{x}} + \hat{\underline{\varepsilon}} = \underline{x} + \underline{q}_d - \underline{q}_d + \underline{q}_e = \underline{x} + \underline{q}_e$$

$$\underline{Y}_g = \hat{\underline{x}}(\underline{r}_g) \cdot z^{-f}$$

where $\underline{q}_d$ and $\underline{q}_e$ are dynamic quantized noise and differential vector quantized noise respectively, $z^{-f}$ is frame delay and $\hat{\underline{x}}(\underline{r}_g)$ is $\hat{\underline{x}}$ at a position displaced by $\underline{r}_g$.

Through the process described above, the dynamic vector quantizer 520 and the differential vector quantizer 522 give g or h as a dynamic vector quantized index 531 and i as a differential vector quantized index 532, respectively, to the variable-length encoder 525. The variable-length encoder converts the reception signals into a variable-length encoded signal 533, w(g·h, i). w(g·h, i) is a dynamic vector quantization coded output.

A preferred embodiment of the dynamic vector quantizer according to the present invention will be described concretely in connection with Fig. 16.

In Fig. 16, indicated at 534 is an input vector register, at 535 is a dynamic output vector address counter, at 537 is a dynamic output vector register, at 538 is an initial distortion arithmetic unit, at 539 is an initial minimum distortion detector and at 540 is an initial output data latch.

The action of this dynamic vector quantizer will be described hereunder. After the input vector 501 has been latched by the input vector register 534, the dynamic output vector address counter 535 reads sequentially a set of dynamic output vectors 530 which has previously been transferred from the coded frame memory 524 to the dynamic output vector code table 536 and the mean value output vector from the dynamic output vector code table 536. The dynamic vector quantized output vector 543 is latched temporarily by the dynamic output vector register 537. The initial distortion arithmetic unit 538 calculates distortions between the input and the output vectors successively. As soon as the minimum distortion output vector has been detected, the minimum distortion detector 539 provides a strobing signal 546. Then, the initial output data latch 540 latches the dynamic output vector or the mean value output vector 544, and the index 547 corresponding to the address of the dynamic output vector.

Thus the dynamic vector quantized signal 526 and the dynamic vector quantized index 537 representing the minimum distortion dynamic output vector or the mean value vector are provided.

The constitution of an embodiment of the differential vector quantizer will be described hereunder in connection with Fig. 17.

In Fig. 17, indicated at 548 is a differential input vector register, at 549 is a differential output vector address counter, at 550 is a differential output vector code table, at 551 is a differential output vector register, at 552 is a secondary distortion arithmetic unit, at 553 is a minimum distortion detector and at 554 is a secondary output data latch.

The action of this differential vector quantizer will be described hereunder.

Let $\underline{\varepsilon} = \{\varepsilon_1, \varepsilon_2, ..., \varepsilon_k\}$ denote a differential input vector. The dynamic vector quantized signal, namely, the feedback loop connected to the coded frame memory of Fig. 11, formed by dynamic vector quantization using the picture signal sequences of the present and the preceding frames is removed and differential input vectors are obtained by using dynamic vector quantized signal sequences obtained through a feed-forward mode. Then, a set of N differential output vectors is obtained through the clustering training of the differential input vectors. Let $E = \{\hat{\underline{\varepsilon}}_1, \hat{\underline{\varepsilon}}_2, ..., \hat{\underline{\varepsilon}}_N\}$ denote the set of the differential output vectors $\hat{\underline{\varepsilon}}_i = \{\hat{\underline{\varepsilon}}_{i1}, \hat{\underline{\varepsilon}}_{i2}, ..., \hat{\underline{\varepsilon}}_{ik}\}$ and $I = \{1, 2, ..., N\}$ denote an index set of the differential output vectors. Then, differential quantization $Q_e$ is expressed as a cascaded connection of coding $C_e$ and decoding $D_e$ as follows.

$Q_e(\varepsilon) - \hat{\underline{\varepsilon}}_i$ if $d(\underline{\varepsilon}, \hat{\underline{\varepsilon}}_i) < d(\underline{\varepsilon}, \hat{\underline{\varepsilon}}_j)$ for all j

$C_e : \varepsilon \rightarrow i$

$D_e : i \rightarrow \hat{\underline{\varepsilon}}$

$Q_e = D_e \cdot C_e$

Expressing distortion $d(\underline{\varepsilon}, \hat{\underline{\varepsilon}}_i)$ in Euclidean norm,

$$d(\underline{\varepsilon}, \hat{\underline{\varepsilon}}_i) = \Sigma(\varepsilon_j - \hat{\underline{\varepsilon}}_{ij})^2.$$

Therefore, the differential vector quantizer maps into

$$\min_i d(\underline{\varepsilon}, \hat{\underline{\varepsilon}}_i)$$

i.e., a differential output vector minimizing the distortion.

In the differential vector quantizer shown in Fig. 17, the differential output vector address counter 549 counts up consecutively when the differential input vector 527 is latched by the differential input vector register 548 and reads sets of differential output vectors which has previously been obtained by clustering training consecutively from the differential output vector code table 550. The differential output vectors 557 is latched temporarily by the differential output vector register 551. Then, the secondary distortion arithmetic unit 553 calculates $d(\underline{\varepsilon}, \underline{\hat{\varepsilon}}_j)$ and the secondary minimum distortion detector 553 detects a differential output vector for the minimum distortion

$$\min_{i} d(\underline{\varepsilon}, \underline{\hat{\varepsilon}}_i).$$

Upon the detection of the minimum distortion output vector, the strobing signal 560 is given to make the secondary output data buffer 554 latch the differential output vector 558 and the address signal 561 corresponding to the differential output vector index. The differential vector quantizer gives $\hat{\underline{\varepsilon}}$ as the differential output vector 528 for the minimum distortion and the index i of the differential output vector as the differential vector quantized index 532.

The dynamic multistage vector quantization encoder acts in the processing procedure as described above.

The constitution of an embodiment of the dynamic multistage vector quantization decoder will be described hereinafter in connection with Fig. 18.

In Fig. 18, indicated at 528 is a variable-length decoder, at 563 is a dynamic vector quantized index latch, at 564 is a decoded frame memory and at 565 is a differential vector quantized index latch.

The action of the dynamic multistage vector quantization decoder will be described hereunder.

The variable-length coded signal 533 processed through variable-length encoding by the dynamic multistage vector quantization encoder, i.e., s(g·h, i), is decoded by the variable-length decoder 562 into the dynamic vector quantized index 531, namely, g or h, and a differential vector quantized index, i.e., i. The dynamic vector quantized index latch 563 latches g or h temporarily and reads, by using g or h as an address signal, the corresponding dynamic output vector $\underline{y}_g$ or mean value vector $\underline{y}_h$ as a dynamic vector quantized signal 526, i.e., $\hat{\underline{x}}$ from the dynamic output vector code table 536. The dynamic output vector $\underline{y}(\underline{r}_g)$ is transferred beforehand from the decoded frame memory 564 to the dynamic output vector code table. The differential vector quantized index latch 565 uses the differential vector quantized index 532 as an address signal to read the corresponding differential output vector $\hat{\underline{\varepsilon}}_j$ from the differential output vector code table 550 and obtains the differential vector quantized signal 528, i.e., $\hat{\underline{\varepsilon}}$. The adder 523 adds the differential vector quantized signal 528 and the dynamic vector quantized signal 526 to regenerate and give the dynamic multistage vector quantized signal 530, i.e., $\hat{\hat{\underline{x}}}$ and sends the same to the decoded frame memory 564. Those processes are expressed by the following formulas.

$$\text{Since } \underline{y}_g = \hat{\hat{\underline{x}}}(\underline{r}_g) \cdot z^{-f},$$
$$g \text{ or } h \rightarrow \underline{y}_g \text{ or } \underline{y}_h = \underline{x} + \hat{\underline{q}}_d = \hat{\underline{x}}$$
$$i \rightarrow \hat{\underline{\varepsilon}}_i = -\hat{q}_d + \hat{q}_e = \hat{\underline{\varepsilon}}$$
$$\hat{\hat{\underline{x}}} = \hat{\underline{x}} + \hat{\underline{\varepsilon}} = \underline{x} + \hat{q}_e.$$

Thus, when the dynamic output vector code table of the encoder and the differential output vector code table of the decoder, and the coded frame memory and the decoded frame memory of the dynamic multistage vector quantization are constituted and controlled so as to act in the same contents, the variable-length coded signal w(g, h, i) is obtained through highly efficient coding process.

In this process, the maximum amount of information $H_v$ of the dynamic multistage vector quantization is given by

$$H_v = K^{-1} \cdot \log_2(P \cdot \mu \cdot N) \text{bits/sample}$$

where P is the number of dynamic output vectors, $\mu$ is the number of mean value vectors and N is the number of differential output vectors.

With the provision of the encoder on the transmission side and the decoder on the reception side, the dynamic multistage vector quantizer achieves highly efficient coded transmission as a high-efficiency encoder for picture signals.

The dynamic multistage vector quantizer has been described on an assumption that the block size (the number of dimensions of vectors) is the same for the initial multistage vector quantization and for the secondary differential vector quantization, however, the block size may be different between the initial multistage vector quantization and the secondary differential vector quantization. Naturally, the primary differential vectors may be vector-quantized through a plurality of stages to nth differential vectors. Furthermore, when the distortion in vector quantization exceeds a predetermined threshold, it is possible to encode the distortion so as to be identified as an insignificant vector.

A fourth embodiment of the present invention will be described hereinafter.

This embodiment of the present invention is a vector quantizer capable of achieving highly efficient inter-frame coding by eliminating redundancy resulting from intra-frame and inter-frame correlations of animated picture signals.

The principle on which this embodiment is based will be described prior to the description of the embodiment. Suppose that an object has moved in a scene from a position A to a position B while the frame has changed from a frame No. N-1 to a frame No. N. Then, the picture pattern of k x k lattice block L (k is a plural number) surrounding a part of the object in the frame No. N-1 is approximately the same as the picture pattern of a k x k lattice block M surrounding the same part of the object in the frame No. N. That is, as viewed on the same scene, the center of the block M is located at a distance indicated by a vector r from the center of the block L. This vector is defined as a movement vector. The movement vector r is detected by the following method. k x k Lattice blocks which provide an arrangement of the center of each block are cut out from the frame No. N-1 in the frame No. N with a point (a point indicated by a cross) located in the frame No. N-1 at the same position as that of the center of the objective block M as origin. In this example, twenty-five blocks are produced. These blocks are designated as blocks $S_1$, $S_2$, ..., $S_{25}$ and the degree of identity with the objective block M in the frame No. N is defined by

$$D_m = \sum_{j=1}^{k} \sum_{j=1}^{k} |S_m(i, j) - M(i, j)|.$$

The block $S_m$ which minimizes the degree of identity $D_m$ is the block L. The vector from the center of the block L to the origin (0, 0) is detected as a movement vector r = (u, v).

Accordingly, to apply movement compensation in inter-frame predictive coding, when the block M of a picture signal in the frame No. N is given to an inter-frame predictive encoder, a picture signal formed by shifting the block L of a picture signal in the preceding frame, i.e., the frame No. N-1, with in the scene by the movement vector r is used to minimize the power of the inter-frame predictive error signal so that coding efficiency is improved.

Fig. 19 shows an exemplary constitution of a device of this kind. In Fig. 19, indicated at 610 is an A/D converter, at 620 is a raster/block scan converter, at 630 is a frame memory, at 640 is a movement vector detector, at 650 is a variable delay circuit, at 660 is a subtractor, at 670 is a scalar quantizer, at 680 is an adder and at 690 is a variable-length encoder.

The operation of this device will be described hereinafter. First the A/D converter digitizes an analog picture input signal 600 and gives a picture signal sequence 602 according to the sequence of raster scanning. The raster/block scan converter 620 converts the output procedure on the time sequence of the picture signal of the raster scan digital signal sequence 602 into block scanning and gives a block scan picture image input signal 603 arranged in lattice blocks (the interior of the block is raster scanning) from the top to the bottom and from the left to the right of the scene. A one-frame preceding regenerative picture signal 604 regenerated through inter-frame DPCM loop is read from the frame memory 630. The movement vector detector 640 performs block-matching between the present block scan picture input signal 603 and the one-frame preceding regenerative picture signal 604 and gives the movement vector 605 r = (u, v) of the one-frame preceding picture signal 604 minimizing the degree of identity. The elements u, v of the movement vector correspond to the horizontal and the vertical shifts of the picture element of the block respectively. The variable delay circuit 650 gives a picture signal which is the nearest to the present block scan picture input signal 603, namely, a picture signal formed by block-shifting the one-frame preceding regenerative picture signal 604 by the movement vector, as a predictive picture signal 606. The subtracter 660 calculates the difference between the block scan picture input signal 603 and the predictive picture signal 606 and gives a predictive error picture signal 607 to the scalar quantizer 670. The scalar quantizer 670 having a scalar quantization characteristic, for example, such as shown in Fig. 20, scalar-quantizes the predictive error picture signal 607 which is reduced in electric power through the previous movement compensation and gives a predictive error quantized picture signal 608 which is reduced in the quantization level of each picture element. The adder 680 adds the predictive error quantized picture signal 608 and the predictive picture signal 606 and gives a regenerative picture signal 609 containing a scalar quantization error to the frame memory 630. The frame memory 630 delays the present regenerative picture signal 609 by one-frame cycle.

Fig. 21 shows an exemplary constitution of the movement vector detector 640 for movement compensation. In Fig. 21, indicated at 642 is a movement vector detector, at 641 is an identity degree calculating circuit, at 642 is a movement region line memory, at 643 is a line memory control circuit, at 644 is an identity degree comparator and at 645 is a movement vector latch.

The identity degree calculating circuit 641 of the movement vector detector 640 receives a block M formed by blocking a plurality of the present picture input signal sequences 603. At this time, lines of the one-frame preceding regenerative picture signal 604 of the frame memory 630, corresponding to the search range for the movement region of the block M are stored in the movement region line memory 642. The line memory control circuit 643 reads sequentially the block L and a plurality of blocks arranged around the block L with the block L as the center, each of the one-frame preceding regenerative picture signal 604, from the movement region line memory 642 and gives the same to the identity degree calculating circuit 641. The identity degree calculating circuit 641 calculates the degree of identity $D_m$ of the block M with a plurality of blocks including the block L read from the movement region line memory 642 and the identity degree comparator 644 detects the smallest degree of identity

$$\min_m D_m.$$

The coordinates (u, v) of the center of the block giving the

$$\min_m D_m$$

with the center of the block L as the origin correspond to the horizontal and the vertical address shifts, respectively, of the movement region line memory 642. Therefore, when the degree of identity is minimized, the identity degree comparator 644 gives a movement detection strobing signal 611 to the movement vector latch 665 to make the movement vector latch 665 receive a movement vector address 612. The movement vector latch 654 sends a movement vector 605 r from the center of the block L to the coordinates (u, v) of the center of the block which minimizes the degree of identity $D_m$ within the movement region line memory 642 to the variable delay circuit 650 and the variable-length encoder 690 of Fig. 21.

The variable-length encoder 690 of Fig. 39 processes the movement vector 605 and the predictive error quantized picture signal 608 through variable-length coding to curtail the amount of picture signal information. This process enables low bit rate transmission of the movement compensation inter-frame coded output 601.

Thus the movement compensation inter-frame encoder being constituted, movement compensation is operated for each block and inter-frame DPCM is performed for every picture element. Accordingly, the minute variation of the scene can not be identified from noise and the variable-length coding of the movement vector and the predictive error quantized picture signal is difficult. Furthermore, since the total sum of the differential magnitude of each picture element within the block is selected as an evaluation function for identity calculation at the movement detector, the accuracy of block matching for portions such as the edge portion where sharp variation occurs is not satisfactory. Stilll further, since the control of the variation of the amount of generated information resulting from the variation of the movement is difficult, the signal transmission through a transmission channel of a fixed transmission capacity entails a large loss and the coding of the predictive error quantized picture signal for every picture element is inefficient. Since the movement compensation system is liable to be influenced adversely by transmission channel error, the frame memory needs to be reset for repeating transmission when a transmission channel error occurs, which requires a long resetting time.

Fig. 22 shows a constitution of an embodiment of the present invention formed on the basis of the above-mentioned principle. In Fig. 22, indicated at 655 is a dynamic front vector quantizer and at 666 is a fixed back vector quantizer. Like reference characters designate like or the corresponding parts through Figs. 19 and 22. Fig. 23 shows the constitution of the dynamic front vector quantizer employed in this embodiment of the present invention and Fig. 27 shows the constitution of the fixed back vector quantizer employed in this embodiment of the present invention. In Figs. 25 and 27, indicated at 667 is an input vector register, at 668 is an output vector register, at 669 is a dynamic output vector code table, at 662 is a parallel subtracter, at 621 is a parallel magnitude arithmetic and logic unit, at 622 is a code table address counter, at 623 is a magnitude distortion arithmetic and logic unit, at 624 is a nonlinear minimum distortion detector, at 625 is an index latch, at 626 is a vector latch, at 627 is a minimum distortion detector, at 628 is a differential output vector code table, at 629 is a mean value separation amplitude normalization circuit and at 663 is a significant block decision circuit. The operation of this dynamic multistage vector quantizer embodying the present invention will be described hereinafter in connection with Fig. 22.

Blocks each of a plurality of block scan picture signal input signals 603 processed through A/D conversion and raster/block scan conversion are sent to the dynamic front vector quantizer 655 and the subtractor 660. The dynamic front vector quantizer 655 produces a dynamic output vector on the basis of the picture input signal 603 and the regenerative picture signal 618 of the preceding frame and forms a predictive picture signal 613 corresponding to the position of the block of the picture input signal 603 on the scene through vector quantization and gives the same to the subtractor 660 and, at the same time, a front output vector index 612 to the variable-length encoder 690. Every plurality of the output signals of the subtractor 660, i.e., inter-frame differential picture signals 614 are blocked and are processed by the fixed back vector quantizer 666 for mean value separation amplitude normalization and vector quantization. The fixed back vector quantizer 666 sends a differential output vector as an inter-frame differential vector quantized picture signal 616 together with mean value information and amplitude information to the adder 680 and sends a differential output vector index 615 together with the mean value information and the amplitude information to the variable-length encoder 690. The adder 680 adds the predictive picture signal 613, which is one of the output signals of the dynamic front vector quantizer 655, and the inter-frame differential vector quantized picture signal 616, which is one of the output signals of the fixed back vector quantizer 666, to send a regenerative picture signal 617 to the frame memory 630.

Since all those dynamic multistage vector quantization processes are executed for each block, the sample sequence within each block is defined as a picture element vector. The principle of vector quantization on which this embodiment is based will be explained hereunder.

Suppose $R_1$, $R_2$, ..., $R_N$ are N partitions of $R^k$ for an input vector $\underline{x} = [x_1, x_2, ..., x_k]$ in k-dimensional signal space $R^k$, $Y = [\underline{y}_1, \underline{y}_2, ..., \underline{y}_N]$ is a set of input vectors $\underline{y}_i = [y_{i1}, y_{i2}, ..., y_{ik}]$, which are the output points in a partition $R_i$, and $I = [1, 2, ..., N]$ is an index set for $\underline{y}_i$. Then, vector quantization $V_Q$ is expressed by a cascaded connection of coding C and decoding D:

$V_Q(\underline{x}) = \underline{y}_i$ if $\underline{x} \, \varepsilon \, R_i$

$C : \underline{x} \to i$ if $d(\underline{x}, \underline{y}_i) < d(\underline{x}, \underline{y}_j)$ for all j

$D : i \to \underline{y}_i$.

The distortion measure $d(\underline{x}, \underline{y}_i)$ indicates the distance between the input and the output vector within k-dimensional signal space and, for example, the magnitude distortion measure is given by

$$d(\underline{x}, \, \underline{y}_i) = \sum_{j=1}^{k} |x_j - y_{ij}|.$$

In this condition, the data rate of the index i, i.e., the vector quantization coded output, is $K^{-1}\log_2 N$ bit/picture element. Accordingly, vector quantization achieves highly efficient coding through coding process using the input vector $\underline{x}$ and the index of the output vector $\underline{y}_i$ providing a minimum distortion

$$\min_{i} \, d(\underline{x}, \, \underline{y}_i).$$

Decoding is attained merely by converting the coded signal into an output vector $\underline{y}_i$ corresponding to the index i. The set Y of the output vectors $\underline{y}_i$ is obtained through the clustering training of actual input vectors $\underline{x}$ or from a predetermined probability model. Fig. 27 shows the relation between the input and the output vectors.

The action of the dynamic front vector quantizer 655 will be described hereinafter in connection with Figs. 23, 24, 25 and 26. The dynamic front vector quantizer 655 processes the output signals 618 of the frame memory storing the regenerative picture signals of the preceding frame to produce sequentially dynamic output vector code tables 669, detects an output vector which provides the minimum distortion between the input and the output vectors and forms a predictive picture signal 613. The dynamic output vector code table 699 comprises a fixed output vector code table consisting of several zero vectors of uniform level and a rewritable output vector code table having contents which is updated at every block processing. The content of the fixed output

EP 0 457 362 B1

vector code table is a set $\underline{y}_i^n$ of seven mean value vectors (vectors with the same vector elements) arranged as shown in Fig. 24. The rewritable output vector code table is produced and updated through the following process. As shown in Fig. 25, in the vector quantization of a block M in a frame No. N, with the center (point X) of the block of regenerative signals of the preceding frame (frame No. N-1) on the scene locating at the same position as that of the block M as origin (0, 0), the center of each block constitutes a plurality of shift blocks from block 1 to block 25 arranged as shown in Fig. 26. Each set of blocks and the set of zero vectors are indexed as sets of dynamic output vectors and registered in the dynamic output vector code table. The arrangement of the shift blocks as shown in Fig. 26 is arbitrary. Every k picture input signal sequences 603 are blocked and the block of the picture input signal sequences is latched as an input vector $\underline{x} = [x_1, x_2, ..., x_k]$ by the register 667. The code table address counter 622 first reads sequentially the output vectors $\underline{y}_i^m$ in the rewritable output vector code table from the dynamic output vector code table 699. The output vectors $\underline{y}_i^m$ are latched by the register 688. The magnitude distortion arithmetic unit 623 receives the outputs of the parallel subtractor 662 and the parallel magnitude arithmetic unit 621 and calculates distortions $d_i$ between the input and the output vectors by the use of a formula

$$d_i = d(x, \underline{y}_i^m) = \sum_j |x_j - \underline{y}_{ij}^m|.$$

The nonlinear minimum distortion detector 624 executes, for example, the following process. First the minimum distortion d among all the $d_i$ (i = 1, 2, ..., 25) is detected. The minimum distortion

$$d = \min_i d_i$$

The process is divided into three processes for three cases respectively on the basis of the relation between the value of d and thresholds $T_1$ and $T_2$.
When

$$d > T_1 \qquad \text{Process ①}$$
$$T_2 \leqq d \leqq T_1 \qquad \text{Process ②}$$
$$d < T_2 \qquad \text{Process ③}$$

The Process ① decides that any appropriate output vector for the input vector is found in the output vector code table and changes over to the fixed output vector code table, reads output vectors $\underline{y}_i^m$ sequentially from the fixed output code table and executes the above-mentioned distortion calculation to obtain a new minimum distortion d. The Process ② adopts the previously obtained d as a minimum distortion. The Process ③, to avoid noise causing minimum distortion error, defines minimum distortion d by

$$d = d_1 = d(x, \underline{y}_i^m) = \sum_j |x_j - \underline{y}_{ij}^m|$$

and adopts the distortion from a vector consisting of the picture elements of a block 1 located with a point (0, 0) on the scene of the frame No. N-1, i.e., the point (0, 0) in Fig. 26, as the center.

After the minimum distortion has been detected, strobing signals are sent to the latches 625 and 626. Then, the latch 625 gives an output vector index 612 indicating the address of the output vector, while the latch 626 makes the output vector $\underline{y}_i^m$ or $y_i^n \cdot y_1^m$ become the vector quantized output of the vector $\underline{x}$ and gives the predictive picture signal 613.

The information sent out from the dynamic front vector quantizer to the transmission line is an output vector index and the maximum amount of information is

$$(\log_2 I + \log_2 J)/K \text{ [bit/pel]}$$

where I is the number of fixed output vectors, J is the number of rewritable output vectors and K is the number of dimensions of the vectors. For example, when I = 25, J = 7 and K = 64 (block size: 8 x 8), an amount of information

$$(\log_2 25 + \log_2 7)/64 = 0.12 \text{ [bit/pel] or less is given by the dynamic front vector quantizer.}$$

The action of the fixed back vector quantizer 666 will be described hereunder in connection with Fig. 27.

15

Every k inter-frame differential signals 614, namely, the outputs of the subtractor 660, are blocked and given in the form of a differential input vector $\underline{\varepsilon} = [\varepsilon_1, \varepsilon_2, ..., \varepsilon_k]$. The differential input vector $\underline{\varepsilon}$ is processed through mean value separation normalizing process by the mean value separation normalizing circuit 629 using a mean value $\mu$ and an amplitude $\sigma$ defined by the following formulas to obtain an input vector $e = [e_1, e_2, ..., e_k]$.

$$\mu = K^{-1} \sum_{j=1}^{k} \varepsilon_j$$

$$\sigma = K^{-1} \sum_{j=1}^{k} |\varepsilon_j - \mu|$$

$$e_j = (\varepsilon_j - \mu)/\sigma \ (j = 1, 2, ..., k)$$

The amplitude may be calculated by the use of the following formulas.

$$\sigma = [K^{-1} \sum_{j=1}^{k} (\varepsilon_j - \mu)^2]^{\frac{1}{2}}$$

$$\sigma = \max_{j} |\varepsilon_j - \mu|$$

Through mean value separation normalization process, the input vectors can be distributed at random within a limited region of k-dimensional signal space, and thereby vector quantization efficiency is improved. In implementing this process, sets of output vectors need to be prepared on the basis of the distribution of the input vectors processed through mean value separation normalizing process. After the output vectors have been read in the decoding section, processes reverse to mean value separation normalization, such as amplitude regeneration and mean value regeneration, need to be implemented. Naturally, vector quantization may be a vector quantization without this process. Differential output vectors prepared through clustering training using the mean value separation normalized input vectors are stored beforehand in the differential output vector code table 628. When the mean value separation normalized vector $\underline{e}$ is given, the code table address counter 622 gives sequentially the indices of the vectors of the differential output vector code table to read differential output vectors $\underline{y}_i^e = [y_{i1}^e, y_{i2}^e, ..., y_{ik}^e]$ (i: index) from the differential output vector code table 628 and gives the same to the register 688. The same operation as the distortion calculation in the dynamic movement vector quantizer is implemented to detect a differential output vector providing the minimum distortion from the mean value separation normalized input vector. Since the differential input vectors $\underline{\varepsilon}$ are blocked inter-frame differential signals, the center of distribution thereof is a zero vector. Accordingly, the amount of data to be transmitted can be reduced greatly by setting a threshold not to transmit the information of the indices, mean values and amplitudes of input vectors distributed neat the zero vector. The significant block decision circuit 663 decides, on the basis of the mean value $\mu$ and the amplitude $\sigma$, whether or not the blocks of the differential signal sequences are significant, namely, whether the blocks of the differential signal sequences need to be transmitted as information. A method of this decision is, with $T_\theta$ as a threshold,

when $\mu > T_\theta$ or $\sigma > T_\theta$ the block is significant and
when $\mu \leqq T_\theta$ and $\sigma \leqq T_\theta$ the block is not significant.

When significant, the significant block decision circuit gives the differential output vector $\underline{y}_i^e$ providing the minimum distortion, the mean value $\mu$ and the amplitude $\sigma$ as the inter-frame differential vector quantized picture signal 616 to the adder 680 and the latch 625 gives signals indicating a significant block, i.e., the index of the differential output vector minimizing the distortion, the mean value $\mu$ and the amplitude $\sigma$ to the variable-length encoder 690. When not significant, the significant block decision circuit 663 gives the zero vector and the latch 625 gives only a signal indicating insignificant block.

The output of the encoder thus given includes the output vector index, the differential output vector index and the variable-length coded signal 619 produced by processing the information of the mean value and the amplitude through variable-length coding.

Suppose a certain blocked input picture signal sequences 603 in the frame No. N is a signal source vector $\underline{S}_N = \{S_1, S_2, ..., S_k\}_N$, the block of the predictive picture signal 613 given by the dynamic front vector quantizer is $\underline{\hat{S}}_N$, the block of inter-frame differential picture signals is $\varepsilon_N$, the block 616 of the inter-frame differential vector quantized picture signals given by the fixed back vector quantizer is $\hat{\varepsilon}_N$ and the block of the regenerative picture

signal sequences is $\underline{\hat{\hat{S}}}_N$. Then the general actions of the encoder is given by the following formulas.

$$\varepsilon_N = \underline{S}_N - \hat{\underline{S}}_N$$

$$\hat{\varepsilon}_N = \varepsilon_N + \underline{q}$$

$$\hat{\hat{S}}_N = \hat{\underline{S}}_N = \hat{\varepsilon}_N = (\underline{S}_N - \varepsilon_N) + (\varepsilon_N + \underline{q}) = \underline{S}_N + q$$

where $\underline{q}$ is a fixed back vector quantization error. Accordingly, the smaller the fixed back vector quantization error $\underline{q}$ the more the regenerative picture signal approaches the input picture signal.

The constitution and the action of the decoder of the dynamic multistage vector quantizer embodying the present invention will be described hereinafter. Fig. 28 shows the decoder, in a preferred embodiment, of the dynamic multistage vector quantizer. In Fig. 28, indicated at 631 is a latch, at 632 is a variable-length decoder and at 633 is a mean value and amplitude regenerating circuit. Like reference characters designate like or corresponding parts through Figs. 22, 23, 24 and 28. The decoder receives the output signal 619 of the encoder by the latch 631 and the variable-length decoder 632 separates the code signals into two parts and regenerates the dynamic output vector index 612 m significance signal, the insignificance signal, the differential output vector index, the mean value $\mu$ and the amplitude $\sigma$ 615 by decoding. The variable-length decoder 612 also reads an output vector corresponding to the output vector index from the dynamic output vector code table 699 and regenerates the predictive picture signal 613. On the other hand, when the significance signal is received, the variable-length decoder 632 reads a differential output vector corresponding to the differential output vector index. The amplitude and mean value regenerating circuit 633 multiplies the differential output vector by the amplitude and adds the mean value to regenerate the inter-frame differential vector quantized picture signal 616. For this purpose, a dynamic output vector code table and a differential output vector code table produced through the same process employed in the encoder section are used. The adder 688 calculates the sum of the regenerated predictive picture signal 613 and the inter-frame differential vector quantized picture signal 616 to give a regenerated picture signal 617 as an output picture signal. Furthermore, the regenerated picture signal 617 is stored in the frame memory 630 and is used as information for the decoding process for the next frame.

## Claims

1. An inter-frame prediction videocoder comprising an output circuit (418, 525, 690) and in series connection a subtractor (660), a quantizer (670), an adder (680) and a frame memory (630),
   characterized in that
   the videocoder further contains a first vector quantizer (415, 520, 655) processing an output signal (424, 530, 618) of the frame memory (416, 524, 630) and an input signal (401, 501, 603) of the videocoder;
   the quantizer (670) being a second vector quantizer (419, 522, 666); first and second vector quantizers provide output signals (421, 526, 613; 423, 528, 616) and indices (425, 531, 612; 426, 532, 615) taken from a code table (428) corresponding to the respective output signals;
   said indices (425, 531, 612; 426, 532, 615) of first (415, 520, 655) and second (419, 522, 666) vector quantizers being fed to the output circuit (418, 525, 690), said output circuit (418, 525, 690) encodes said indices (425, 531, 612; 426, 532, 615) and outputs an encoded signal (427, 533, 619) based on said indices (425, 531, 612; 426, 532, 615);
   the output signals (421, 526, 613; 423, 528, 616) of first (415, 520, 655) and second (419, 522, 666) vector quantizers being added by the adder (420, 523, 680);
   the subtractor (417, 521, 660) calculating the difference signal (422, 527, 614) between the output signal (421, 526, 613) and the input signal (401, 501, 603) of the first vector quantizer (415, 520, 655).

2. A videocoder as claimed in claim 1,
   characterized in that first (415, 520, 655) and second (419, 522, 666) vector quantizer comprises,
   an input vector register (402, 534, 548, 667) storing an input vector;
   an output vector code table memory (428, 429, 536, 550, 628, 699) containing a complete set of output vectors; an output vector register (537, 551, 688) storing an output vector provided by the output vector

code table memory;
a distortion calculating unit (406, 407, 408, 409; 538, 539, 552, 553; 662, 621, 623, 624, 627);
at least one latch (411, 540, 554, 625) providing the index indicating the address of the output vector, and an address counter (403, 535, 549, 622) causing the output vectors being read out sequentially from the output vector code table to the output vector register and the corresponding indices being latched in the latch.

3. A videocoder as claimed in claim 2,
characterized by

a) the frame memory (416) which stores the picture signal sequence of a one-frame cycle or more preceding frame,
b) said first vector quantizer being a movement vector quantizer (415) including the input vector register (402) which stores picture input signal sequences to be coded and stores input vectors formed by blocking every K, K being a plural number, input picture signal sequences;
the output vector code table memory (428) being capable of properly extracting a plurality a adjacent blocks lying around a block located at the same position as that of the picture input signal sequences on the scene in the frame memory (416), from the frame memory (416) and reading the same sequentially as movement output vectors; and
the distortion calculating unit (406, 407, 408, 409) being adapted to select a movement output vector having a minimum distortion from the input vector, from a set of movement output vectors stored in the output vector code table memory (428) and sending an address corresponding to the movement output vector as a movement vector index to a multiplexer (418),
c) the subtractor (417) which obtains the difference between the input vector and the selected movement output vector and gives a difference signal,
d) the second vector quantizer (419) including the input vector register (402) which blocks every L, L being a plural number, output signal sequences of the subtractor (417) and stores the same as difference input vectors;
the output vector code table memory (429) which stores a differential output vector set produced previously by using the differential input signal sequences; and
the distortion calculating unit which selects a differential output vector having a minimum distortion from the differential input vector, among the set of differential output vectors;
the second vector quantizer giving the selected differential output vector to the adder (420), and giving an address corresponding to the differential output vector as a differential vector index to the multiplexer (418),
e) the adder (420) which adds the movement output vector and the differential output vector, and then the regenerated output signal to the frame memory (416), and
f) the multiplexer (418) which multiplies the code sequence of the movement vector index by the code sequence of the differential vector index to produce coded output signal sequences (427).

4. A decoder for decoding the output signal (427) of the videocoder as claimed in claim 3 comprising
a demultiplexer (430) which partitions the signal sequences given by the videocoder to obtain the code sequence of decoded movement vector index and the code sequence of the decoded differential vector index;
a variable-delay decoding frame memory (416) capable of storing the picture output signal sequences of the frame preceding at least one-frame cycle;
a rewriteable decoded dynamic output code table memory (428) capable of reading a movement vector corresponding to the movement vector index given thereto by the decoding frame memory (416);
a decoded differential output vector code table memory (429) storing the same contents as those of the differential output vector code table of the videocoder;
a decoder which reads a differential output vector corresponding to the differential vector index given thereto, from the decoded differential output vector code table memory (429), and adds the same to the decoded movement output vector to decode and regenerate the picture output signal sequences.

5. A videocoder as claimed in claim 2,
characterized by

a) the frame memory (524) being capable of storing the picture signal of the frame preceding at least by one-frame cycle,
b) the first vector quantizer (520) which uses a dynamic output vector set consisting of input vectors formed by blocking every K, K being a plural number, picture signal sequences of present frame and the plurality of blocks of picture signal sequences formed by displacing the input vectors by a predetermined picture element on the scene in the frame memory (524) and the fixed mean value output vector set as a dynamic output vector set, and codes a dynamic output vector or a mean value output vector having the minimum distortion from the input vector in K-dimensional signal space into a first index,

c) the subtractor (521) which subtracts the dynamic output vector or the main value output vector having the minimum distortion from the input vector to obtain a differential input vector,

d) the second vector quantizer (522) which codes the differential input vector into the second vector index, i.e. the index of a differential output vector having the minimum distortion among a differential output vector set obtained previously;

e) the adder (523) which adds the dynamic output vector of the mean value output vector which has the minimum distortion and the differential output vector to regenerate the block of the picture signal sequence and sends the same to the frame memory (524),

f) the variable-length encoder (525) which processes the first index and the second index through variable-length encoding.

6. A videocoder according to claim 5, wherein said dynamic vector quantizer uses a set of a plurality of movement vectors produced by dynamic vector-quantizing actual picture signals between frames, so that the total sum of the distortions between output vectors and the dynamic output vectors is minimized, as a plurality of two-dimensional displacement vectors which define the set of dynamic output vectors.

7. A decoder for decoding the output signal (533) of the videocoder as claimed in claim 5 or 6, characterized by

a variable-length decoder (562) which decodes the output of the variable-length encoder (525) into the first index and the second index;

a dynamic output vector quantization decoder which receives the first index and gives a regenerated dynamic output vector or a regenerated mean value corresponding directly to that of the videocoder, among the dynamic output vector set or the mean value output vector set;

a differential vector quantization decoder which receives the second index and gives a regenerated differential output vector corresponding directly to that of the videocoder, among the differential output vector set;

an adder (523) which adds the regenerated dynamic output vector or the regenerated mean value vector in the differential output vector to obtain the block of regenerated picture signal sequences,

a frame memory (564) which delays the regenerated picture signal sequences given by the adder (523) by one-frame cycle and gives a plurality of blocks of the regenerated picture signal sequences displaced by a predetermined picture element on the scene to the dynamic vector quantization decoder as a dynamic output vector.

8. A videocoder as claimed in claim 2, characterized by

a) the frame memory (630) which stores the picture signal sequence of a frame preceding by one-frame cycle or more;

b) the first vector quantizer (655) being adapted to select a first output vector having the minimum distortion from the input vector, from a set of output vectors stored in the output vector code table memory (699),

to select adaptively a second output vector having the minimum distortion from set of output vectors stored in the fixed output vector code table when the distortion of the first output vector is greater than a predetermined upper threshold,

to select adaptively an output vector consisting of the picture elements of the central block among a plurality of blocks extracted from the frame memory (630) when the distortion of the first output vector is smaller than a predetermined threshold,

to select adaptively the first output vector selected from the first output vector code table memory when the distortion of the first output vector is less than or equal to the upper threshold and greater than or equal to the lower threshold, and gives the selected output vector and the corresponding address as an output vector index;

c) the subtractor (660) which calculates the difference between the input vector and the output vector selected under the condition defined by the thresholds and given by the first vector quantizer (655) and gives an inter-frame differential signal; the input vector register (667) which stores input vector blocks formed by blocking every K (K = a plural number) picture input signal sequences to be coded,
d) the second vector quantizer (666) comprising a differential input vector register which stores the output signal sequences given by the subtractor (660) as a differential input vector after blocking every L (L = a plural number) output signal sequences of the subtractor (660) separating the intrablock mean value from the blocks and normalizing the blocks after separating the intrablock mean value by an amplitude factor;
a differential output vector code table (628) storing differential output vectors produced previously by clustering or the like using inter-frame differential signal sequences;
the second vector quantizer (660) being adapted to select a differential output vector having the minimum distortion from the differential output vector code table memory to obtain the address of the selected differential output vector as a differential output vector index;
to decide whether or not the inter-frame differential signal block to be coded is significant by comparing the mean value and the amplitude factor with the significance decision threshold; and
to give the selected differential output vector, a significance label and, when significant, the mean value and the amplitude factor,
e) an adder (680) which adds the output vector given by the first vector quantizer (655) and the output vector given by the second vector quantizer (666) to give regenerated picture signals to the frame memory (630),
f) the variable-length encoder (690) which processes the output vector index given by the first vector quantizer, the significance label given by the second vector quantizer, the mean value, the amplitude factor and the differential output vector index together through variable-length coding.

## Patentansprüche

1. Zwischenbild-Prädiktionsvideokodierer mit einer Ausgangsschaltung (418, 525, 690) und in Reihenschaltung einem Subtrahierer (660), einer Quantisiervorrichtung (670), einem Addierer (680) und einem Bildspeicher (630), dadurch gekennzeichnet, daß

der Videokodierer weiterhin eine erste Vektorquantisiervorrichtung (415, 520, 655) enthält, die ein Ausgangssignal (424, 530, 618) des Bildspeichers (416, 524, 630) und ein Eingangssignal (401, 501, 603) des Videokodierers verarbeitet;

wobei die Quantisiervorrichtung (670) eine zweite Vektorquantisiervorrichtung (419, 522, 666) ist; die erste und zweite Vektorquantisiervorrichtung Ausgangssignale (421, 526, 613; 423, 528, 616) und den jeweiligen Ausgangssignalen entsprechende, einer Kodetabelle (428) entnommene Indizes (425, 531, 612; 426, 532, 615) bereitstellen;

wobei die besagten Indizes (425, 531, 612; 426, 532, 615) der ersten (415, 520, 655) und zweiten (419, 522, 666) Vektorquantisiervorrichtung der Ausgangsschaltung (418, 525, 690) zugeführt werden, die besagte Ausgangsschaltung (418, 525, 690) die besagten Indizes (425, 531, 612; 426, 532, 615) kodiert und ein auf besagten Indizes (425, 531, 612; 426, 532, 615) basierendes kodiertes Signal (427, 533, 619) ausgibt;

wobei die Ausgangssignale (421, 526, 613; 423, 528, 616) der ersten (415, 520, 655) und zweiten (419, 522, 666) Vektorquantisiervorrichtung vom Addierer (420, 523, 680) addiert werden;

und der Subtrahierer (417, 521, 660) das Differenzsignal (422, 527, 614) zwischen dem Ausgangssignal (421, 526, 613) und dem Eingangssignal (401, 501, 603) der ersten Vektorquantisiervorrichtung (415, 520, 655) berechnet.

2. Videokodierer nach Anspruch 1, dadurch gekennzeichnet, daß die erste (415, 520, 655) und zweite (419, 522, 666) Vektorquantisiervorrichtung folgendes umfaßt:

ein Eingangsvektorregister (402, 534, 548, 667) zum Speichern eines Eingangsvektors;
einen eine vollständige Menge von Ausgangsvektoren enthaltenden Ausgangsvektorkodetabellenspeicher (428, 429, 536, 550, 628, 699);
ein einen vom Ausgangsvektorkodetabellenspeicher bereitgestellten Ausgangsvektor speicherndes Ausgangsvektorregister (537, 551, 688); eine Verschiebungsberechnungseinheit (406, 407, 408, 409,; 538, 539, 552, 553; 662, 621, 623, 624, 627);
mindestens ein den die Adresse des Ausgangsvektors anzeigenden Index bereitstellendes Speicherglied (411, 540, 554, 625), und
einen Adreßzähler (403, 535, 549, 622), der bewirkt, daß die Ausgangsvektoren sequentiell aus der Aus-

gangsvektorkodetabelle zum Ausgangsvektorregister ausgelesen werden und die entsprechenden Indizes im Speicherglied gespeichert werden.

3.  Videokodierer nach Anspruch 2, gekennzeichnet durch

a) den Bildspeicher (416), der die Bildsignalfolge eines einen Bildzyklus oder mehr vorhergehenden Bildes speichert,

b) wobei die erste Vektorquantisiervorrichtung eine Bewegungsvektorquantisiervorrichtung (415) ist, die das Eingangsvektorregister (402) enthält, das zu kodierende Bildeingangssignalfolgen speichert und durch Einteilung aller K Eingangsbildsignalfolgen (wobei K eine Mehrzahl ist) in Teilbildbereiche gebildete Eingangsvektoren speichert;

wobei der Ausgangsvektorkodetabellenspeicher (428) in der Lage ist, eine Mehrzahl von um einen Teilbildbereich herum liegende benachbarte Teilbildbereiche, die am selben Ort wie dem der Bildeingangssignalfolgen in der Szene im Bildspeicher (416) befindlich sind, aus dem Bildspeicher (416) ordnungsgemäß zu entnehmen und dieselben sequentiell als Bewegungsausgangsvektoren zu lesen; und

wobei die Verschiebungsberechnungseinheit (406, 407, 408, 409) einen Bewegungsausgangsvektor mit einer Mindestverschiebung aus dem Eingangsvektor aus einer Menge Bewegungsausgangsvektoren auswählen kann, die im Ausgangsvektorkodetabellenspeicher (428) gespeichert sind, und eine dem Bewegungsausgangsvektor entsprechende Adresse als Bewegungsvektorindex zu einem Multiplexer (418) senden kann,

c) den Subtrahierer (417), der die Differenz zwischen dem Eingangsvektor und dem ausgewählten Bewegungsausgangsvektor erhält und ein Differenzsignal abgibt,

d) die zweite Vektorquantisiervorrichtung (419), die das Eingangsvektorregister (402) enthält, das alle L Ausgangssignalfolgen (L entspricht einer Mehrzahl) des Subtrahierers (417) in Teilbildbereiche einteilt und dieselben als Differenzeingangsvektoren speichert;

den Ausgangsvektorkodetabellenspeicher (429), der eine vorher durch Verwendung der Differenzeingangssignalfolgen erzeugte Differenzausgangsvektormenge speichert; und

die Verschiebungsberechnungseinheit, die einen Differenzausgangsvektor mit Mindestverschiebung vom Differenzeingangsvektor unter der Menge von Differenzausgangsvektoren aussucht; wobei die zweite Vektorquantisiervorrichtung den ausgewählten Differenzausgangsvektor zum Addierer (420) abgibt und eine dem Differenzausgangsvektor entsprechende Adresse als Differenzvektorindex an den Multiplexer (418) abgibt,

e) den Addierer (420), der den Bewegungsausgangsvektor und den Differenzausgangsvektor und dann das regenerierte Ausgangssignal zum Bildspeicher (416) addiert, und

f) den Multiplexer (418), der die Kodefolge des Bewegungsvektorindex mit der Kodefolge des Differenzvektorindex multipliziert, um kodierte Ausgangssignalfolgen (427) zu erzeugen.

4.  Dekodierer zum Dekodieren des Ausgangssignals (427) des Videokodierers nach Anspruch 3, mit einem Demultiplexer (430), der die vom Videokodierer abgegebenen Signalfolgen aufteilt, um die Kodefolge des dekodierten Bewegungsvektorindex und die Kodefolge des dekodierten Differenzvektorindex zu erhalten;

einem Dekodierbildspeicher (416) mit einstellbarer Verzögerung, der die Bildausgangssignalfolgen des mindestens einen Bildzyklus vorhergehenden Bildes speichert;

einem wiederbeschreibbaren Kodetabellenspeicher (428) für den dekodierten dynamischen Ausgangskode, der einen Bewegungsvektor entsprechend dem vom Dekodierbildspeicher (416) an ihn abgegebenen Bewegungsvektorindex lesen kann;

einem Kodetabellenspeicher (429) für den dekodierten Differenzausgangsvektor, der denselben Inhalt wie den der Differenzausgangsvektorkodetabelle des Videokodierers speichert;

einem Dekodierer, der einen Differenzausgangsvektor entsprechend dem ihm zugeführten Differenzvektorindex aus dem Kodetabellenspeicher (429) für den dekodierten Differenzausgangsvektor ausliest und denselben dem dekodierten Bewegungsausgangsvektor hinzufügt, um die Bildausgangssignalfolgen zu dekodieren und regenerieren.

5.  Videokodierer nach Anspruch 2, gekennzeichnet durch

a) den Bildspeicher (524), der das Bildsignal des mindestens einen Bildzyklus vorhergehenden Bildes speichern kann,

b) die erste Vektorquantisiervorrichtung (520), die eine dynamische Ausgangsvektormenge benutzt, die aus durch Einteilen aller K Bildsignalfolgen des vorliegenden Bildes (K ist eine Mehrzahl) in Teilbildbereiche gebildeten Eingangsvektoren besteht, und die Mehrzahl von durch Verlagern der Eingangsvektoren um einen vorbestimmten Bildpunkt in der Szene im Bildspeicher (524) gebildeten Teilbildbereichen von Bildsignalfolgen und die Menge fester Mittelwertausgangsvektoren als dynamische Ausgangsvektormenge, und einen dynamischen Ausgangsvektor oder einen Mittelwertausgangsvektor mit Mindestverschiebung vom Eingangsvektor im K-dimensionalen Signalraum in einen ersten Index kodiert,

c) den Subtrahierer (521), der den dynamischen Ausgangsvektor oder den Mittelwertausgangsvektor mit Mindestverschiebung vom Eingangsvektor subtrahiert, um einen Differenzeingangsvektor zu erhalten,

d) die zweite Vektorquantisiervorrichtung (522), die den Differenzeingangsvektor in den zweiten Vektorindex kodiert, d.h. den Index eines Differenzausgangsvektors mit der Mindestverschiebung unter einer vorher erhaltenen Differenzausgangsvektormenge;

e) den Addierer (523), der den dynamischen Ausgangsvektor des Mittelwertausgangsvektors mit Mindestverschiebung und den Differenzausgangsvektor addiert, um den Teilbildbereich der Bildsignalfolge zu regenerieren, und dieselbe zum Bildspeicher (524) sendet,

f) den Kodierer (525) für veränderliche Wortlängen, der den ersten Index und den zweiten Index durch Kodieren mit veränderlicher Wortlänge verarbeitet.

6. Videokodierer nach Anspruch 5, wobei die besagte dynamische Vektorquantisiervorrichtung eine Menge einer Mehrzahl von durch dynamische Vektorquantisierung von aktuellen Bildsignalen zwischen Bildern erzeugten Bewegungsvektoren benutzt, so daß die Gesamtsumme der Verschiebungen zwischen Ausgangsvektoren und den dynamischen Ausgangsvektoren minimiert ist, als Mehrzahl von zweidimensionalen Verschiebungsvektoren, die die Menge von dynamischen Ausgangsvektoren definieren.

7. Ein Dekodierer zur Dekodierung des Ausgangssignals (533) der Videokodiervorrichtung nach Anspruch 5 oder 6, gekennzeichnet durch einen
Dekodierer (562) für veränderliche Wortlängen, der die Ausgabe des Kodierers (525) für veränderliche Wortlängen in den ersten Index und den zweiten Index dekodiert;
einen Vektorquantisierungsdekodierer für dynamische Ausgangsvektoren, der den ersten Index empfängt und einen regenerierten dynamischen Ausgangsvektor oder einen regenerierten Mittelwert abgibt, der direkt dem der Videokodiervorrichtung entspricht, unter der Menge dynamischer Ausgangsvektoren oder der Menge von Mittelwertausgangsvektoren;
einen Differenzvektorquantisierungsdekodierer, der den zweiten Index empfängt und einen regenerierten Differenzausgangsvektor abgibt, der direkt dem der Videokodiervorrichtung entspricht, unter der Menge von Differenzausgangsvektoren;
einen Addierer (523), der den regenerierten dynamischen Ausgangsvektor oder den regenerierten Mittelwertvektor in dem Differenzausgangsvektor addiert, um den Teilbildbereich regenerierter Bildsignalfolgen zu erhalten,
einen Bildspeicher (564), der die von dem Addierer (523) abgegebenen regenerierten Bildsignalfolgen um einen Einbild-Zyklus verzögert und eine um einen vorbestimmten Bildpunkt in der Szene verschobene Mehrzahl von Teilbildbereichen der regenerierten Bildsignalfolgen als dynamischen Ausgangsvektor an den Vektorquantisierungsdekodierer für dynamische Vektoren gibt.

8. Videokodierer nach Anspruch 2, gekennzeichnet durch
a) den Bildspeicher (630), der die Bildsignalfolge eines um einen Einbild-Zyklus oder mehr vorhergehenden Bildes speichert;
b) wobei die erste Vektorquantisiervorrichtung (655) zur Auswahl eines ersten Ausgangsvektors mit der Mindestverschiebung vom Eingangsvektor aus einer Menge von im Ausgangsvektorkodetabellenspeicher (699) gespeicherten Ausgangsvektoren,
zur adaptiven Auswahl eines zweiten Ausgangsvektors mit der Mindestverschiebung aus der in der Festausgangsvektorkodetabelle gespeicherten Menge von Ausgangsvektoren, wenn die Verschiebung des ersten Ausgangsvektors größer als ein vorbestimmter oberer Schwellwert ist,
zur adaptiven Auswahl eines aus den Bildpunkten des Mittelbereiches bestehenden Ausgangsvektors aus einer aus dem Bildspeicher (630) abgeleiteten Mehrzahl von Teilbildbereichen, wenn die Verschiebung des ersten Ausgangsvektors geringer als ein vorbestimmter Schwellwert ist,
zur adaptiven Auswahl des aus dem ersten Ausgangsvektorkodetabellenspeicher ausgewählten ersten Ausgangsvektors,
wenn die Verschiebung des ersten Ausgangsvektors geringer als oder gleich dem oberen Schwellwert und größer als oder gleich dem unteren Schwellwert ist, geeignet ist und den ausgewählten Ausgangsvektor und die entsprechende Adresse als Ausgangsvektorindex abgibt;

c) den Subtrahierer (660), der die Differenz zwischen dem Eingangsvektor und dem unter dem von den Schwellwerten definierten Zustand ausgewählten und von der ersten Vektorquantisiervorrichtung (655) abgegebenen Ausgangsvektor berechnet und ein Zwischenbild-Differenzsignal abgibt; das Eingangsvektorregister (667), das durch Einteilen aller K (K = eine Mehrzahl) zu kodierende Bildeingangssignalfolgen in Teilbildbereiche gebildete Eingangsvektorbereiche speichert,

d) die zweite Vektorquantisiervorrichtung (666) mit einem Differenzeingangsvektorregister, das die vom Subtrahierer (660) abgegebenen Ausgangssignalfolgen nach Einteilen aller L (L = eine Mehrzahl) Ausgangssignalfolgen des Subtrahierers (660) in Teilbildbereiche als Differenzeingangsvektor speichert, wobei der Zwischenbereichsmittelwert von den Teilbildbereichen getrennt und die Teilbildbereiche nach Abtrennen des Zwischenbereichsmittelwertes durch einen Amplitudenfaktor normiert werden; eine Differenzausgangsvektorkodetabelle (628) vorher erzeugte Differenzausgangsvektoren durch Häufung oder dergleichen mittels Zwischenbild-Differenzsignalfolgen speichert; die zweite Vektorquantisiervorrichtung (660) zur Auswahl eines Differenzausgangsvektors mit der Mindestverschiebung aus dem Differenzausgangsvektorkodetabellenspeicher geeignet ist, um die Adresse des ausgewählten Differenzausgangsvektors als Differenzausgangsvektorindex zu erhalten; um durch Vergleichen des Mittelwertes und des Amplitudenfaktors mit dem Bedeutungsentscheidungsschwellwert zu entscheiden, ob der zu kodierende Zwischenbild-Differenzsignalbereich bedeutend ist oder nicht; und um den ausgewählten Differenzausgangsvektor, ein Bedeutungsetikett und, bei Bedeutung, den Mittelwert und den Amplitudenfaktor abzugeben,

e) einen Addierer (680), der den von der ersten Vektorquantisiervorrichtung (655) abgegebenen Ausgangsvektor und den von der zweiten Vektorquantisiervorrichtung (666) abgegebenen Ausgangsvektor addiert, um regenerierte Bildsignale an den Bildspeicher (630) abzugeben,

f) den Kodierer (690) für veränderliche Wortlängen, der den von der ersten Vektorquantisiervorrichtung abgegebenen Ausgangsvektorindex, das von der zweiten Vektorquantisiervorrichtung abgegebene Bedeutungsetikett, den Mittelwert, den Amplitudenfaktor und den Differenzausgangsvektorindex durch Kodierung mit veränderlicher Wortlänge zusammen verarbeitet.

## Revendications

1. Codeur vidéo de prédiction inter-trame comprenant un circuit de sortie (418, 525, 690) et, en connexion série, un soustracteur (660), un quantificateur (670), un additionneur (680) et une mémoire de trame (630), caractérisé en que

le codeur vidéo contient également un premier quantificateur de vecteurs (415, 520, 655) qui traite un signal de sortie (424, 530, 618) de la mémoire de trame (416, 524, 630) et un signal d'entrée (401, 501, 603) du codeur vidéo;

le quantificateur (670) est un second quantificateur de vecteurs (419, 522, 666);

les premier et second quantificateurs de vecteurs fournissent des signaux de sortie (421, 526, 613; 423, 528, 616) et des indices (425, 531, 612; 426, 532, 615) lus dans une table de codes (428) correspondant aux signaux de sortie respectifs;

lesdits indices (425, 531, 612; 426, 532, 615) de premier (415, 520, 655) et second (419, 522, 666) quantificateurs de vecteurs sont fournis au circuit de sortie (418, 525, 690), et ledit circuit de sortie (418, 525, 690) code lesdits indices (425, 531, 612; 426, 532, 615) et délivre un signal codé (427, 533, 619) en fonction desdits indices (425, 531, 612; 426, 532, 615);

les signaux de sortie (421, 526, 613; 423, 528, 616) des premier (415, 520, 655) et second (419, 522, 666) quantificateurs de vecteurs sont sommés par l'additionneur (420, 523, 680); et

le soustracteur (417, 521, 660) calcule le signal de différence (422, 527, 614) entre le signal de sortie (421, 526, 613) et le signal d'entrée (401, 501, 603) du premier quantificateur de vecteurs (415, 520, 655).

2. Codeur vidéo selon la revendication 1, caractérisé en ce que ces premier (415, 520, 655) et second (419, 522, 666) quantificateurs de vecteurs comprennent

un registre de vecteur d'entrée (402, 534, 548, 667) qui mémorise un vecteur d'entrée;

une mémoire de table de codes de vecteur de sortie (428, 429, 536, 550, 628, 699) qui contient un ensemble complet de vecteurs de sortie;

un registre de vecteur de sortie (537, 551, 688) qui mémorise un vecteur de sortie fourni par la

EP 0 457 362 B1

mémoire de table de codes de vecteur de sortie;

une unité de calcul de distorsion (406, 407, 408, 409; 538, 539, 552, 553; 662, 621, 623, 624, 627); et

au moins un registre à verrouillage (411, 540, 554, 625) qui fournit l'indice indiquant l'adresse du vecteur de sortie, et un compteur d'adresses (403, 535, 549, 622) qui commande une lecture séquentielle des vecteurs de sortie dans la table de codes de vecteur de sortie pour les fournir au registre de vecteur de sortie, les indices correspondants étant mémorisés dans le registre à verrouillage.

3. Codeur vidéo selon la revendication 2, caractérisé par

a) la mémoire de trame (416) qui mémorise la séquence de signal d'image d'une trame précédente décalée d'un cycle de trame ou plus;

b) ledit premier quantificateur de vecteurs qui est un quantificateur de vecteurs de mouvement (415) et inclut le registre de vecteur d'entrée (402) mémorisant des séquences de signal d'image d'entrée à coder et mémorisant des vecteurs d'entrée constitués en établissant des blocs toutes les K séquences de signal d'image d'entrée, K étant un nombre supérieur à un,

la mémoire de table de codes de vecteur de sortie (428) étant capable d'extraire correctement dans la mémoire de trame (416) une pluralité de blocs adjacents se trouvant autour d'un bloc situé à la même position que celle des séquences de signal d'image d'entrée sur la scène dans la mémoire de trame (416), et lisant ceux-ci séquentiellement comme étant des vecteurs de sortie de mouvement, et

l'unité de calcul de distorsion (406, 407, 408, 409) étant adaptée pour sélectionner un vecteur de sortie de mouvement ayant une distorsion minimale par rapport au vecteur d'entrée, dans un ensemble de vecteurs de sortie de mouvement mémorisés dans la mémoire de table de codes de vecteur de sortie (428) et transmettant à un multiplexeur (418) une adresse correspondant au vecteur de sortie de mouvement comme étant un indice de vecteur de mouvement;

c) le soustracteur (417) qui obtient la différence entre le vecteur d'entrée et le vecteur de sortie de mouvement sélectionné et fournit un signal de différence;

d) le second quantificateur de vecteurs (419) qui inclut le registre de vecteur d'entrée (402) établissant des blocs toutes les L séquences de signal de sortie, L étant un nombre supérieur à un, du soustracteur (417) et les mémorise comme étant des vecteurs d'entrée de différence,

la mémoire de table de codes de vecteur de sortie (429) mémorisant un ensemble de vecteurs de sortie différentiels produits préalablement en utilisant les séquences de signal d'entrée différentiel, et

l'unité de calcul de distorsion sélectionnant un vecteur de sortie différentiel ayant une distorsion minimale par rapport au vecteur d'entrée différentiel, parmi l'ensemble de vecteurs de sortie différentiels,

le second quantificateur de vecteurs fournissant le vecteur de sortie différentiel sélectionné à l'additionneur (420), et fournissant au multiplexeur (418) une adresse correspondant au vecteur de sortie différentiel comme étant un indice de vecteur différentiel;

e) l'additionneur (420) qui somme le vecteur de sortie de mouvement et le vecteur de sortie différentiel, et ensuite, le signal de sortie régénéré destiné à la mémoire de trame (416); et

f) le multiplexeur (418) qui multiplie la séquence de codes de l'indice de vecteur de mouvement par la séquence de codes de l'indice de vecteur différentiel pour produire des séquences de signal de sortie codé (427).

4. Décodeur pour décoder le signal de sortie (427) du codeur vidéo selon la revendication 3, comprenant

un démultiplexeur (430) qui divise les séquences de signal fournies par le codeur vidéo pour obtenir la séquence de codes d'indice de vecteur de mouvement décodé et la séquence de codes d'indice de vecteur différentiel décodé;

une mémoire de trame de décodage à retard variable (416) qui est capable de mémoriser les séquences de signal de sortie d'image de la trame précédente décalée d'au moins un cycle de trame;

une mémoire de table réinscriptible de codes de vecteur de sortie dynamique décodé (428) qui est capable de lire un vecteur de mouvement correspondant à l'indice de vecteur de mouvement qui lui est fourni par la mémoire de trame de décodage (416);

une mémoire de table de codes de vecteur de sortie différentiel décodé (429) qui mémorise les mêmes contenus que ceux de la table de codes de vecteur de sortie différentiel du codeur vidéo; et

un décodeur qui lit un vecteur de sortie différentiel correspondant à l'indice de vecteur différentiel qui lui est fourni, provenant de la mémoire de table de codes de vecteur de sortie différentiel décodé (429),

24

et somme celui-ci au vecteur de sortie de mouvement décodé pour décoder et régénérer les séquences de signal de sortie d'image.

5. Codeur vidéo selon la revendication 2, caractérisé par

a) la mémoire de trame (524) qui est capable de mémoriser le signal d'image de la trame précédente décalée d'au moins un cycle de trame;

b) le premier quantificateur de vecteurs (520) qui utilise un ensemble de vecteurs de sortie dynamiques consistant en des vecteurs d'entrée constitués en établissant des blocs toutes les K séquences de signal d'image, K étant un nombre supérieur à un, de la présente trame et la pluralité de blocs de séquences de signal d'image formés en déplaçant les vecteurs d'entrée d'un élément d'image prédéterminé sur la scène dans la mémoire de trame (524) et l'ensemble de vecteurs de sortie de valeur moyenne fixe comme étant un ensemble de vecteurs de sortie dynamiques et code en un premier indice un vecteur de sortie dynamique ou un vecteur de sortie de valeur moyenne ayant la distorsion minimale par rapport au vecteur d'entrée dans un espace de signal à K dimensions;

c) le soustracteur (521) qui soustrait le vecteur de sortie dynamique ou le vecteur de sortie de valeur moyenne ayant la distorsion minimale par rapport au vecteur d'entrée pour obtenir un vecteur d'entrée différentiel;

d) le second quantificateur de vecteurs (522) qui code le vecteur d'entrée différentiel en le second indice de vecteur, c'est-à-dire en l'indice d'un vecteur de sortie différentiel ayant la distorsion minimale parmi un ensemble de vecteurs de sortie différentiels obtenus préalablement;

e) l'additionneur (523) qui somme le vecteur de sortie dynamique du vecteur de sortie de valeur moyenne ayant la distorsion minimale et le vecteur de sortie différentiel pour régénérer le bloc de la séquence de signal d'image et transmet celui-ci à la mémoire de trame (524); et

f) le codeur à longueur variable (525) qui traite le premier indice et le second indice par l'intermédiaire d'un codage à longueur variable.

6. Codeur vidéo selon la revendication 5, dans lequel ledit quantificateur de vecteurs dynamiques utilise un ensemble d'une pluralité de vecteurs de mouvement produits en quantifiant en des vecteurs dynamiques des signaux d'image réels entre des trames, de sorte que la somme totale des distorsions entre des vecteurs de sortie et les vecteurs dynamiques de sortie est minimisée, comme une pluralité de vecteurs de déplacement à deux dimensions qui définissent l'ensemble de vecteurs de sortie dynamiques.

7. Décodeur pour décoder le signal de sortie (533) du codeur vidéo selon la revendication 5 ou 6, caractérisé par

un décodeur à longueur variable (562) qui décode la sortie du codeur à longueur variable (525) en le premier indice et le second indice;

un décodeur de quantification de vecteur de sortie dynamique qui reçoit le premier indice et fournit un vecteur de sortie dynamique régénéré ou une valeur moyenne régénérée correspondant directement à celle du codeur vidéo, parmi l'ensemble de vecteurs de sortie dynamiques ou l'ensemble de vecteurs de sortie de valeur moyenne;

un décodeur de quantification de vecteur différentiel qui reçoit le second indice et fournit un vecteur de sortie différentiel régénéré correspondant directement à celui du codeur vidéo, parmi l'ensemble de vecteurs de sortie différentiels;

un additionneur (523) qui somme le vecteur de sortie dynamique régénéré ou le vecteur de valeur moyenne régénéré dans le vecteur de sortie différentiel pour obtenir le bloc de séquences de signal d'image régénéré; et

une mémoire de trame (564) qui retarde les séquences de signal d'image régénéré fournies par l'additionneur (523) d'un cycle de trame et fournit au décodeur de quantification de vecteur dynamique une pluralité de blocs des séquences de signal d'image régénéré, déplacées d'un élément d'image prédéterminé sur la scène, comme étant un vecteur de sortie dynamique.

8. Codeur vidéo selon la revendication 2, caractérisé par

a) la mémoire de trame (630) qui mémorise la séquence de signal d'image d'une trame précédente décalée d'un cycle de trame ou plus;

b) le premier quantificateur de vecteurs (655) qui est adapté

pour sélectionner un premier vecteur de sortie ayant la distorsion minimale par rapport au vecteur d'entrée, dans un ensemble de vecteurs de sortie mémorisés dans la mémoire de table de codes de vecteur de sortie (699),

pour sélectionner de manière adaptative un second vecteur de sortie ayant la distorsion minimale dans l'ensemble de vecteurs de sortie mémorisés dans la table de codes de vecteur de sortie fixe lorsque la distorsion du premier vecteur de sortie est supérieure à un seuil supérieur prédéterminé,

pour sélectionner de manière adaptative un vecteur de sortie composé des éléments d'image du bloc central parmi une pluralité de blocs extraits dans la mémoire de trame (630) lorsque la distorsion du premier vecteur de sortie est inférieure à un seuil prédéterminé,

pour sélectionner de manière adaptative le premier vecteur de sortie sélectionné dans la première mémoire de table de codes de vecteur de sortie lorsque la distorsion du premier vecteur de sortie est inférieure ou égale au seuil supérieur et est supérieure ou égale au seuil inférieur,

et qui fournit le vecteur de sortie sélectionné et l'adresse correspondante comme étant un indice de vecteur de sortie;

c) le soustracteur (660) qui calcule la différence entre le vecteur d'entrée et le vecteur de sortie sélectionné dans les conditions définies par les seuils et fourni par le premier quantificateur de vecteurs (655) et fournit une signal différentiel inter-trame,

le registre de vecteur d'entrée (667) mémorisant des blocs de vecteur d'entrée constitués en établissant des blocs toutes les K séquences de signal d'image d'entrée à coder (K = un nombre supérieur à un);

d) le second quantificateur de vecteurs (666) qui comprend un registre de vecteur d'entrée différentiel qui mémorise les séquences de signal de sortie fournies par le soustracteur (660) comme étant un vecteur d'entrée différentiel après avoir établi des blocs toutes les L séquences de signal de sortie (L = un nombre supérieur à un) du soustracteur (660) séparant la valeur moyenne intra-bloc des blocs et normalisant par un facteur d'amplitude les blocs après séparation de la valeur moyenne intra-bloc,

une table de codes de vecteur de sortie différentiel (628) mémorisant des vecteurs de sortie différentiels produits préalablement par rassemblement, ou autres analogues, en utilisant des séquences de signal différentiel inter-trame,

le second quantificateur de vecteurs (660) étant adapté pour sélectionner un vecteur de sortie différentiel ayant la distorsion minimale dans la mémoire de table de codes de vecteur de sortie différentiel pour obtenir l'adresse du vecteur de sortie différentiel sélectionné comme étant un indice de vecteur différentiel de sortie,

pour décider si oui ou non le bloc de signal différentiel inter-trame à coder est significatif en comparant la valeur moyenne et le facteur d'amplitude au seuil de décision de signification, et

pour fournir le vecteur de sortie différentiel sélectionné, une étiquette de signification et, lorsqu'ils sont significatifs, la valeur moyenne et le facteur d'amplitude;

e) un additionneur (680) qui somme le vecteur de sortie fourni par le premier quantificateur de vecteurs (655) et le vecteur de sortie fourni par le second quantificateur de vecteurs (666) pour fournir des signaux d'image régénérés à la mémoire de trame (630); et

f) le codeur à longueur variable (690) qui traite conjointement l'indice de vecteur de sortie fourni par le premier quantificateur de vecteurs, l'étiquette de signification fournie par le second quantificateur de vecteurs, la valeur moyenne, le facteur d'amplitude et l'indice de vecteur de sortie différentiel par l'intermédiaire d'un codage à longueur variable.

# FIG. 1

# FIG. 2

# FIG. 3

$X_1$ $X_2$ $X_3$ $X_4$     $X'_1$ $X'_2$
● ○ ● ○     ● ●

$X_5$ $X_6$ $X_7$ $X_8$     $X'_3$ $X'_4$
○ ● ○ ●     ● ●

$X_9$ $X_{10}$ $X_{11}$ $X_{12}$     $X'_5$ $X'_6$
○ ○ ● ○     ● ●

$X_{13}$ $X_{14}$ $X_{15}$ $X_{16}$     $X'_7$ $X'_8$
○ ● ○ ○     ● ●

INPUT VECTOR (K=16)     INPUT SUBVECTOR (N=8)

$Y_{i1}$ $Y_{i2}$ $Y_{i3}$ $Y_{i4}$     $Y'_{i1}$ $Y'_{i2}$
▲ △ ▲ △     ▲ ▲

$Y_{i5}$ $Y_{i6}$ $Y_{i7}$ $Y_{i8}$     $Y'_{i3}$ $Y'_{i4}$
△ ▲ △ △     ▲ ▲

$Y_{i9}$ $Y_{i10}$ $Y_{i11}$ $Y_{i12}$     $Y'_{i5}$ $Y'_{i6}$
▲ △ ▲ △     ▲ ▲

$Y_{i13}$ $Y_{i14}$ $Y_{i15}$ $Y_{i16}$     $Y'_{i7}$ $Y'_{i8}$
△ ▲ △ △     ▲ ▲

OUTPUT VECTOR (K=16)     OUTPUT SUBVECTOR (N=8)

# FIG. 5

FIG. 4

FIG. 6

FIG. 7

# FIG. 8

FRAME No.N

M

$1r$

$1r = (2,1)$

$\times$ (0,0)

L

FRAME No. N-1

# FIG. 9

402

$e_1$
$e_2$
$e_K$

422

406

$-$
$-$
$-$

407

$|\cdot|$
$|\cdot|$
$|\cdot|$

408

$d_n = \sum_j |e_j - y^e_{nj}|$

409

$\min_n d_n$

$y^e_{n1}$ $y^e_{n2}$ ----- $y^e_{nK}$

423

411

426

DIFFERENTIAL OUTPUT VECTOR CODE TABLE [$\underline{y^e_n}$]

429

CODE TABLE ADDRESS COUNTER (n)

403

LATCH n

FIG. 10

429

DIFFERENTIAL
OUTPUT
VECTOR
CODE TABLE
$[\underline{y}_n^e]$

426

405

$y_{n1}^e$
$y_{n2}^e$
⋮
$y_{nk}^e$

427

413

LATCH
$\ell$

DEMULTI-
PLEXER

430

423

425

428

DYNAMIC
OUTPUT
VECTOR
CODE TABLE
$[\underline{y}_i^m]$

405

$y_{i1}^m$
$y_{i2}^m$
⋮
$y_{ik}^m$

420

424

421

416

DECODED
FRAME
MEMORY

FIG. 11

524

ENCODED
FRAME
MEMORY

529

501

530

521

522

DYNAMIC
VECTOR
QUANTIZATION
ENCODER

DIFFERENTIAL
VECTOR
QUANTIZATION
ENCODER

523

520

526

527

528

532

531

525

VARIABLE-
LENGTH
ENCODER

533

FIG. 12 $\longrightarrow m$

FIG. 13

# FIG. 14

# FIG. 15

FIG. 16

501 → INPUT VECTOR REGISTER (534, 541) → INITIAL DISTORTION ARITHMETIC UNIT (538, 544, 545) → MINIMUM DISTORTION DETECTOR (539) → 546 → INITIAL OUTPUT DATA LATCH (540) → 526, 531

DYNAMIC OUTPUT VECTOR REGISTER (537, 543, 534) 

530 → DYNAMIC OUTPUT VECTOR CODE TABLE (536, 542)

DYNAMIC OUTPUT VECTOR ADDRESS COUNTER (535, 547)

FIG. 17

527 → DIFFERENTIAL INPUT VECTOR REGISTER (548, 555) → SECONDARY DISTORTION ARITHMETIC UNIT (552, 558, 559) → SECONDARY DISTORTION DETECTOR (553) → 560 → SECONDARY OUTPUT DATA LATCH (554) → 528, 532

DIFFERENTIAL OUTPUT VECTOR REGISTER (551, 557, 558)

550 → DIFFERENTIAL OUTPUT VECTOR CODE TABLE (556)

DIFFERENTIAL OUTPUT VECTOR ADDRESS COUNTER (549, 561)

EP 0 457 362 B1

35

FIG. 18

530
523
528
526
550 — DIFFERENTIAL OUTPUT VECTOR CODE TABLE
536 — DYNAMIC OUTPUT VECTOR CODE TABLE
564 — DECODED FRAME MEMORY
531
532
565 — DIFFERENTIAL VECTOR QUANTIZED INDEX LATCH
563 — DYNAMIC VECTOR QUANTIZED INDEX LATCH
531
532
562
533 — VARIABLE-LENGTH CODED SIGNAL

FIG. 19

690 — VARIABLE-LENGTH ENCODER
601
608
680
609
670 — SCALAR QUANTIZER
630 — FRAME MEMORY
606
650 — VARIABLE DELAY CIRCUIT
660, 607
603
620 — R/B SCAN CONVERTER
605
664
640 — MOVEMENT VECTOR DETECTOR
602
603
600
610 — A/D CONVERTER

# FIG. 20

OUTPUT

INPUT

0

# FIG. 21

641

603 → ANALOGY DEGREE COMPUTATION CIRCUIT

642 MOVEMENT REGION LINE MEMORY ← 604

644 ANALOGY DEGREE COMPARATOR

643 LINE MEMORY CONTROL CIRCUIT

612

665

611 → MOVEMENT VECTOR LATCH → 605

# FIG. 22

# FIG. 23

# FIG. 24

$x_2$

$x_4$

$y_7^n$

$y_6^n$

$x_4$

$y_2^n$

$y_1^n$

$x_1$

$x_3$

# FIG. 25

TIME

FRAME No. N

M

L

B

A

FRAME No.N-1

L

×
(0,0)

A

# FIG. 26

```
  21                        11                        20
  O                         O                         O
(-4,2)                    (0,2)                      (4,2)

           15      7       3       6      14
           O       O       O       O      O
         (-2,1)  (-1,1)  (0,1)   (1,1)  (2,1)

  25        19     12      4       1       2      10      18                24
  O         O      O       O       ⊚       O      O       O                 O
(-5,0)    (-3,0) (-2,0)  (-1,0)  (0,0)   (1,0)  (2,0)   (3,0)             (5,0)

           16      8       5       9      17
           O       O       O       O      O
         (-2,-1) (-1,-1) (0,-1)  (1,-1) (2,-1)

  22                        13                        23
  O                         O                         O
(-4,-2)                   (0,-2)                     (4,-2)
```

# FIG. 28

```
              619    631        632
               ┌──────────┐  ┌──────────────┐
               │ LATCH    │  │ VARIABLE-    │
            ──▶│   ℓ      │─▶│ LENGTH       │
               │          │  │ DECODER      │
               └──────────┘  └──────────────┘
```

627

**DIFFERENTIAL OUTPUT VECTOR CODE TABLE**

615

633

616

**AMPLITUDE/ MEAN VALUE REGENERATING CIRCUIT**

699

**DYNAMIC OUTPUT VECTOR CODE TABLE**

612

613

680

618

630

**FRAME MEMORY**

617

40

FIG. 27

# FIG. 29

# FIG. 30

FIG. 31 (PRIOR ART)

43

# FIG. 32

# FIG. 33
## (PRIOR ART)